# EUROPEAN PATENT APPLICATION

(11) **EP 4 700 565 A1**
(43) Date of publication of application: **25.02.2026**
(21) Application number: 24900802.0
(22) Date of filing: 25.09.2024
(51) Int. Cl.: G06F 8/33, G06F 8/38, G06F 8/30, G06F 16/332, G06F 16/338, G06F 40/56, G06N 3/0475, G06N 3/096

(54) **METHOD AND ELECTRONIC DEVICE FOR PROVIDING CODE BY USING GENERATIVE ARTIFICIAL INTELLIGENCE MODEL**

(30) Priority: 04.12.2023 KR 20230173446
(71) Applicant: Samsung Electronics Co., Ltd., Suwon-si, Gyeonggi-do 16677 (KR)
(72) Inventor: LEE, Kangwook, Suwon-si, Gyeonggi-do 16677 (KR)
(74) Representative: Gulde & Partner
(86) International application number: PCT/KR2024/014494
(87) International publication number: WO 2025/121614

(57) **Abstract**

Provided are an electronic device and a method implemented by the electronic device for providing code by using a generative artificial intelligence (AI) model. The method may include obtaining a user input corresponding to a first document, based on the user input, obtaining first context information available for code generation, based on the first context information and the user input, generating a first prompt for the code generation, based on a length of the first prompt, selecting, from the first context information, second context information according to priority information, based on the second context information and the user input, generating a second prompt corresponding to the first prompt, transmitting the first prompt or the second prompt to a server; and receiving, from the server, recommended code generated through the generative Al model based on the first prompt or the second prompt and providing the recommended code.

## Description

### TECHNICAL FIELD

The disclosure relates to a method and an electronic device both using a generative artificial intelligence (Al) model. More particularly, the disclosure relates to a method of and an electronic device for providing code by using a generative Al model.

### BACKGROUND ART

Generative artificial intelligence (Al) is a technology of learning the structure and patterns of large-scale data and generating new synthetic data, based on input data. This generative Al generates human-level results in a variety of tasks involving text, images, voice, video, music, and the like. For example, a generative language model refers to a technology capable of performing various natural language processing tasks. The generative language model, which is a generative Al model for text, generates response text to a user's inquiry. The generative language model may include a large language model (LLM).

Recently, generative Al has been widely used in technical fields, such as a search function, chatbots, and code generation.

### DISCLOSURE OF INVENTION

### SOLUTION TO PROBLEM

According to an embodiment of the disclosure, a method of providing code by using a generative artificial intelligence (Al) model is provided. The method may include obtaining a user input corresponding to a first document. The method may include obtaining first context information available for code generation based on the user input. The method may include generating a first prompt for the code generation based on the first context information and the user input. The method may include selecting, from the first context information, second context information according to priority information based on a length of the first prompt. The method may include generating a second prompt corresponding to the first prompt based on the second context information and the user input. The method may include transmitting the first prompt or the second prompt to a server. The method may include receiving, from the server, recommended code generated through the generative Al model based on the first prompt or the second prompt and providing the recommended code.

According to an embodiment of the disclosure, an electronic device for providing code by using a generative artificial intelligence (AI) model is provided. The electronic device may include at least one processor including processing circuitry, and memory comprising one or more storage media storing at least one instruction. The at least one instruction, when executed by the at least one processor individually or collectively, cause the electronic device to obtain a user input corresponding to a first document. The at least one instruction, when executed by the at least one processor individually or collectively, cause the electronic device to obtain first context information available for code generation based on the user input. The at least one instruction, when executed by the at least one processor individually or collectively, cause the electronic device to generate a first prompt for the code generation based on the first context information and the user input. The at least one instruction, when executed by the at least one processor individually or collectively, cause the electronic device to select, from the first context information, second context information according to priority information based on a length of the first prompt. The at least one instruction, when executed by the at least one processor individually or collectively, cause the electronic device to generate a second prompt corresponding to the first prompt based on the second context information and the user input. The at least one instruction, when executed by the at least one processor individually or collectively, cause the electronic device to transmit the first prompt or the second prompt to a server. The at least one instruction, when executed by the at least one processor individually or collectively, cause the electronic device to receive, from the server, recommended code generated through the generative Al model based on the first prompt or the second prompt and provide the code.

According to an embodiment of the disclosure, a computer-readable recording medium having recorded thereon a computer program, which, when executed by a computer, performs the above method.

### BRIEF DESCRIPTION OF DRAWINGS

FIG. 1 is a diagram for schematically explaining a system that provides code by using a generative artificial intelligence (AI) model, according to an embodiment of the disclosure.
FIG. 2 is a flowchart of a method of providing code by using a generative Al model, according to an embodiment of the disclosure.
FIG. 3A is a diagram for describing a prompt regarding a generative AI model, according to an embodiment of the disclosure.
FIG. 3B is a diagram for describing a prompt regarding a generative AI model, according to an embodiment of the disclosure.
FIG. 4 is a diagram for explaining a user interface that provides code by using a generative AI model, according to an embodiment of the disclosure.
FIG. 5 is a block diagram of a system for providing code by using a generative Al model, according to an embodiment of the disclosure.
FIG. 6 is a diagram for describing a process of extracting code information, according to an embodiment of the disclosure.
FIG. 7 is a diagram for describing a process of searching for code information, according to an embodiment of the disclosure.
FIG. 8 is a block diagram for explaining a process of combining context information, according to an embodiment of the disclosure.
FIG. 9 is a block diagram for explaining a process of summarizing a prompt, according to an embodiment of the disclosure.
FIG. 10 is a view for explaining a process of summarizing a prompt by using a generative language model, according to an embodiment of the disclosure.
FIG. 11 is a view illustrating a prompt that is provided by a generative Al model, according to an embodiment of the disclosure.
FIG. 12 is a flowchart of an operation of obtaining a user input, according to an embodiment of the disclosure.
FIG. 13 is a view illustrating a prompt that is provided by a generative Al model, according to an embodiment of the disclosure.
FIG. 14 is a flowchart of an operation of obtaining a user input, according to an embodiment of the disclosure.
FIG. 15 is a flowchart of an operation of obtaining context information, according to an embodiment of the disclosure.
FIG. 16 is a flowchart of an operation of generating a summarized prompt, according to an embodiment of the disclosure.
FIG. 17A is a diagram for explaining a system that provides code by using a generative AI model, according to an embodiment of the disclosure.
FIG. 17B is a diagram for explaining a system that provides code by using a generative AI model, according to an embodiment of the disclosure.
FIG. 17C is a diagram for explaining a system that provides code by using a generative AI model, according to an embodiment of the disclosure.
FIG. 18 is a block diagram of a structure of an electronic device according to an embodiment of the disclosure.
FIG. 19 is a block diagram of a structure of a server according to an embodiment of the disclosure.

### MODE FOR THE INVENTION

Embodiments of the disclosure are described in detail herein with reference to the accompanying drawings so that this disclosure may be easily performed by one of ordinary skill in the art to which the disclosure pertains. The disclosure may, however, be embodied in many different forms and should not be construed as being limited to the embodiments set forth herein. Embodiments of the disclosure will now be described more fully with reference to the accompanying drawings.

Throughout the disclosure, the expression "at least one of a, b or c" indicates only a, only b, only c, both a and b, both a and c, both b and c, all of a, b, and c, or variations thereof.

Although general terms widely used at present were selected for describing the disclosure in consideration of the functions thereof, these general terms may vary according to intentions of one of ordinary skill in the art, case precedents, the advent of new technologies, and the like. Terms arbitrarily selected by the applicant of the disclosure may also be used in a specific case. In this case, their meanings may be understood through the descriptions thereof. Hence, the terms must be defined based on their meanings and the contents of the entire specification, not by simply stating the terms.

An expression used in the singular may encompass the expression of the plural, unless it has a clearly different meaning in the context. While such terms as "first", "second", etc., may be used to describe various components, such components must not be limited to the above terms. The above terms are used only to distinguish one component from another.

The terms "comprises" and/or "comprising" or "includes" and/or "including" when used in this specification, specify the presence of stated elements, but do not preclude the presence or addition of one or more other elements. The terms "unit", "-er (-or)", and "module" when used in this specification may refer to a unit in which at least one function or operation is performed.

The expression "configured to (or set to)" used herein may be used interchangeably with, for example, "suitable for", "having the capacity to", "designed to", "adapted to", "made to", or "capable of", according to situations. The expression "configured to (or set to)" may not only necessarily refer to "specifically designed to" in terms of hardware. Instead, in some situations, the expression "system configured to" may refer to a situation in which the system is "capable of" together with another device or component parts. The expression "module does ~ " used herein may be used interchangeably with "module is configured to do", according to situations.

In an example case in which an element (e.g., a first element) is "coupled to" or "connected to" another element (e.g., a second element), the first element may be directly coupled to or connected to the second element, or, unless otherwise described, a third element may exist therebetween.

According to one or more embodiments of the disclosure, a module "transmitting" or "delivering" data may refer to providing data to another module. A module may be connected to other modules either by wire or wirelessly. The module may provide data directly to another module, or may provide data to the other module via another module.

According to one or more embodiments of the disclosure, descriptions of techniques that are well known in the art and not directly related to the disclosure may be omitted. This is to clearly convey the gist of the disclosure by omitting any unnecessary explanation. In the drawings, parts irrelevant to the description are omitted for simplicity of explanation, and like numbers refer to like elements. In addition, reference numerals used in each drawing are only for describing each drawing, and different reference numerals used in different drawings do not indicate different elements. Actual sizes of respective elements are not necessarily represented in the drawings. In the drawings, the same or corresponding elements are denoted by the same reference numerals.

The advantages and features of the disclosure and methods of achieving the advantages and features will become apparent with reference to embodiments of the disclosure described in detail below with reference to the accompanying drawings. However, this is not intended to limit the disclosure to particular modes of practice, and all changes, equivalents, and substitutes that do not depart from the spirit and technical scope are encompassed in the disclosure. These embodiments are provided so that the disclosure will be thorough and complete, and will fully convey the scope of the disclosure to one of ordinary skill in the art. An embodiment of the disclosure may be defined according to the claims.

According to one or more embodiments of the disclosure, each block of flowchart illustrations and combinations of blocks in the flowchart illustrations may be implemented by computer program instructions. The computer program instructions may be provided to a processor of a general-purpose computer, special purpose computer, or other programmable data processing equipment, and the instructions, which are executed via the processor of the computer or other programmable data processing equipment, may generate means for performing functions specified in the flowchart block(s). The computer program instructions may also be stored in a computer-usable or computer-readable memory that may direct a computer or other programmable data processing equipment to function in a particular manner, and the instructions stored in the computer-usable or computer-readable memory may produce a manufactured article including instruction means that perform the functions specified in the flowchart block(s). The computer program instructions may be mounted on a computer or other programmable data processing equipment.

According to one or more embodiments of the disclosure, each block of a flowchart may represent a module, segment, or portion of code, which includes one or more executable instructions for implementing specified logical function(s). According to an embodiment of the disclosure, it is also possible that the functions mentioned in the blocks occur out of order. For example, two blocks shown in succession may in fact be executed substantially concurrently, or may be executed in the reverse order according to functions.

According to one or more embodiments of the disclosure, the term 'unit', 'module', or '... er(or) 'used herein may denote a hardware element such as a field-programmable gate array (FPGA) or an application-specific integrated circuit (ASIC), and performs a certain function. The 'unit' or '... er(or) 'may not be limited to hardware. The term 'unit' or '...er(or) 'may be configured to be included in an addressable storage medium or to reproduce one or more processors. According to an embodiment of the disclosure, the term 'unit' or '...er(or)' may include, by way of example, object-oriented software components, class components, and task components, and processes, functions, attributes, procedures, subroutines, segments of a program code, drivers, firmware, a micro code, a circuit, data, a database, data structures, tables, arrays, and variables. Functions provided through a specific component or a specific '... unit' may be combined to reduce the number, or may be separated into additional components. According to an embodiment of the disclosure, the 'unit' or '... er(or)' may include one or more processors.

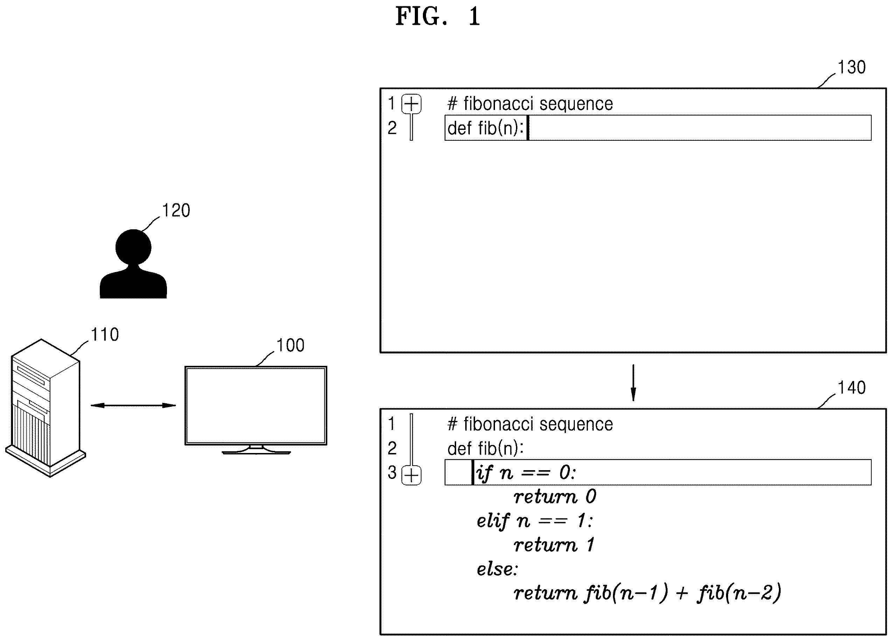

FIG. 1 is a diagram for schematically explaining a system that provides code by using a generative artificial intelligence (AI) model, according to an embodiment of the disclosure.

According to an embodiment of the disclosure, an electronic device 100 and a server 110 may provide a user 120 with a code recommendation service that provides the code by using a generative Al model. The code recommendation service according to the disclosure may provide a recommendation code related to code that the user 120 is writing or code that is scheduled to be corrected. For example, the code recommendation service may allow the user 120 to input information related to which the user wants a recommendation code.

According to one or more embodiments of the disclosure, "generative AI "may include AI technology of generating new text, images, etc. in response to input data (e.g., text and images). According to an embodiment of the disclosure, generative Al may generate output data corresponding to a request, based on input data including a user's request.

According to one or more embodiments of the disclosure, the "generative Al model" may include an Al model (e.g., a neural network model) that implements generative AI technology. The generative AI model may generate new data with similar characteristics to the input data or new data corresponding to the input data by learning a pattern and structure of training data. For example, the generative AI model may generate an image by using an image-to-image or text-to-image method. However, the disclosure is not limited thereto, and as such, the generative Al model may include various expressions representing the same/similar concepts. For example, the generative Al model may be referred to as a "creative model" or "generative model", and is not limited to the examples described above.

According to an embodiment of the disclosure, the electronic device 100 may obtain a user input for code generation. For example, the user input may include a signal or input data for code generation that is input to the electronic device 100 by the user 120.

According to one or more embodiments of the disclosure, a "user input" may include input data that is input to an electronic device by a user. According to an embodiment of the disclosure, the user input may include an input signal obtained through an input/output device of the electronic device. For example, the electronic device may obtain a user's input signal for generating code through an input device. The input device may include, but Is not limited to, a keyboard or microphone. However, the disclosure is not limited thereto, and as such, the user input may include various expressions representing the same/similar concepts. For example, the user input may be referred to as input data or an input signal, and is not limited to the examples described above.

Referring to FIG. 1, a first interface 130 shows code written in the electronic device 100 by the user 120. The electronic device 100 may provide a recommendation code related to the code included in the first interface 130 as in a second interface 140. For example, the user 120 may be writing code for a function "fib" having "n" as a variable, as shown in the first interface 130. The electronic device 100 may provide a recommendation code for the function "fib" having "n" as a variable, as shown in the first interface 140. For example, the electronic device 100 may determine the purpose, intention, and/or function of a function according to the name of the function and variables of the function, and may generate and provide code related to an operation of the function. For example, the electronic device 100 may provide the code related to the operation of the function by displaying the recommendation code a display. The electronic device 100 may determine the purpose of the function "fib(n) "to calculate the value of a Fibonacci sequence according to an integer n, and may generate code related to an operation of a function "fib(n)". According to one or more embodiments of the disclosure, code that is the target of a recommendation code by the electronic device 100 may be referred to as target code. For example, "def fib(n) "is target code of the electronic device 100, and the electronic device 100 may provide a recommendation code corresponding to the target code.

The electronic apparatus 100 may obtain context information for generating code. The context information may include code related to a target document. For example, the context information may include code or comments included in the target document, and code related to a document being currently written in an integrated development environment (IDE), such as the target document. For example, the electronic device 100 may identify an annotation "# Fibonacci sequence" of the first interface 130 as the context information.

According to one or more embodiments of the disclosure, the "context information" may include background information that may be referred to perform the generative Al model. According to an embodiment of the disclosure, the context information may include a description or related information about data generated by the generative Al model. However, the disclosure is not limited thereto, and as such, the context information may include various expressions representing the same/similar concepts. For example, the context information may include, but is not limited to, as a background, conditions, or an environment.

The electronic device 100 may generate a prompt for the generative AI model by using the context information. The prompt may include information for code generation. The generative AI model may receive a prompt and output code corresponding to the prompt

According to one or more embodiments of the disclosure, the "prompt" may include input data for the generative AI model. According to an embodiment of the disclosure, the prompt may include input data for beginning an interaction with the generative Al model. The prompt may include a text input including one or more words and/or one or more sentences. According to an embodiment of the disclosure, the prompt may include natural language text. The natural language text may include a variety of information that the generative AI model may use to generate a response to a request. For example, the prompt may include at least one of context information, intent information, task information, or constraints information. However, the disclosure is not limited thereto, and as such, the prompt may include various expressions representing the same/similar concepts. For example, the prompt may include, but is not limited to, "Input", "Input Phrase", "User command", "Directive", "Instruction", "Task query", "Trigger sentence", or "Message", and is not limited thereto.

According to an embodiment of the disclosure, the electronic device 100 may summarize the prompt based on the length of the prompt. For example, the electronic device 100 may summarize the prompt when the prompt is longer than a threshold value. For example, the electronic device 100 may summarize the prompt based on a determination that prompt is longer than a threshold value. The electronic device 100 may summarize information included in the prompt based on priority information. For example, the electronic device 100 may correct at least a portion of the information included in the prompt to be shorter in length, or may delete a portion of the information. According to an embodiment of the disclosure, a prompt not yet summarized may be referred to as a first prompt, and a summarized prompt may be referred to as a second prompt.

The "threshold value" used herein may refer to an upper limit value of the length of the prompt. According to an embodiment of the disclosure, in an example case in which the length of the prompt is greater than the threshold value, the generative Al model may not generate output data or may generate inaccurate output data. According to an embodiment of the disclosure, the length of the prompt may be determined in units of token. The token may represent a smallest unit of a character string whose meaning a generative AI model is able to understand. According to an embodiment of the disclosure, a length of the character string that constitutes the token may not be constant. However, the disclosure is not limited thereto, and as such, the threshold value may include various expressions representing the same/similar concepts. For example, the threshold value may include, but is not limited to, a maximum, a maximum threshold level, or a predetermined value.

According to an embodiment of the disclosure, the electronic device 100 may transmit a prompt to the server 110. The server 110 may generate code corresponding to the prompt by using the generative Al model. The electronic device 100 may receive information about the code from the server 110, and provide the code by using the received information.

According to an embodiment of the disclosure, the electronic device 100 may be any of various types of device that provides personalized code to a task of the user 120. For example, the electronic device 100 may be implemented by using various types and shapes of electronic devices each including a display. The electronic device 100 may include, but is not limited to, devices capable of displaying code through a display, such as a smart TV, a smartphone, a tablet personal computer (PC), a laptop PC, a glasses-type display, and a head mounted display (HMD).

According to an embodiment of the disclosure, the electronic device 100 may be implemented by using various types and shapes of electronic devices each capable of being connected to a display by wire or wirelessly. For example, the electronic device 100 may include, but is not limited to, devices capable of displaying code through a display by being connected to the display by wire or wirelessly, such as a settop box and a desk top PC.

According to an embodiment of the disclosure, the server 110 may be a device that generates code by using the generative Al model. The server 110 may be a device capable of processing complex calculations and tasks using large-scale data, such as training, inference, management, and distribution of the generative Al model. According to an embodiment of the disclosure, training of the generative AI model that is executed on the server 110 may be performed by another computing device. The server 110 may receive a prompt for code generation from the electronic device 100, which is a client device, and may transmit information about the generated code to the electronic device 100.

According to an embodiment of the disclosure, the electronic device 100 and the server 110 that provide a code recommendation service may be referred to as a "code recommendation system." Alternatively, for convenience of explanation, the electronic device 100 and the server 110 may simply be referred to as a "system." According to an embodiment of the disclosure, an embodiment in which code is generated by the code recommendation system and provided to a user will be described. However, operations of the disclosure do not have to be performed by the code recommendation system.

According to an embodiment of the disclosure, operations of providing code may be independently performed by the electronic device 100. In this case, the generative AI model that generates code by using the prompt may be stored in the electronic device 100. The electronic device 100 may generate code by performing operations according to the disclosure by using the generative Al model. According to an embodiment, the electronic device 100 has relatively low computing performance compared to the server 110, and as such, the generative AI model used by the electronic device 100 may be an AI model lightweighted to be adapted for the computing performance of the electronic device 100.

According to an embodiment of the disclosure, operations of providing code may be independently performed by the server 110. In this case, the server 110 may receive only a request for code generation from the electronic device 100, generate code by performing the operations according to the disclosure, and return a result of the generation to the electronic device 100.

According to an embodiment of the disclosure, the electronic device 100 may include a server. For example, the external device 100 may include a server that provides a cloud computing service. In other words, the electronic device 100 may perform an operation, a program, and/or a function according to a request from another electronic device (e.g., a client device), and may transmit and display results of the operation, the program, and/or the function to and on the other electronic device. For example, the electronic device 100 may perform an operation of providing code according to the disclosure, and may display the code through a display of the other electronic device.

According to an embodiment of the disclosure, the operations of providing code may be separately performed by a plurality of electronic devices. For example, among the operations according to the disclosure, "operation A" may be performed by "electronic device A", and "operation B" may be performed by "electronic device B." Because examples of various implementation methods according to the disclosure, such as those described above, are obvious, descriptions will be omitted in the disclosure for the sake of brevity.

Detailed operations, performed by the electronic device 10, of recommending code, based on an input of the user 120 will be described in more detail through drawings and their descriptions which will be described later.

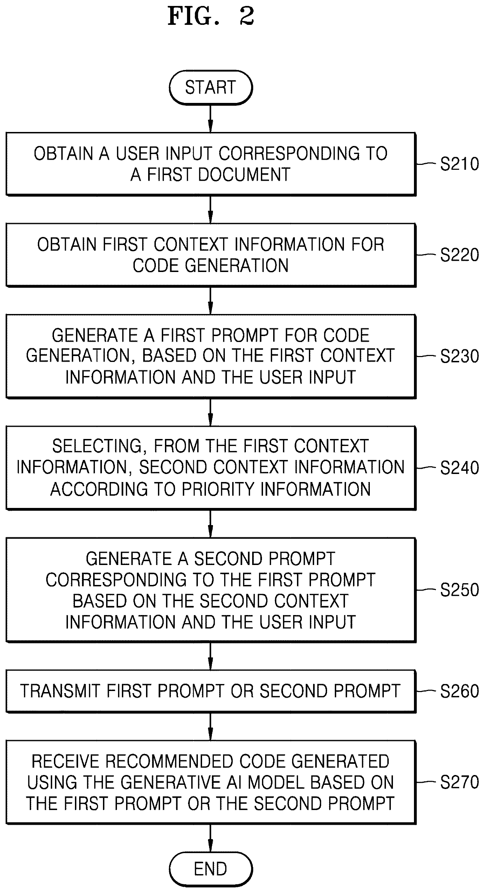

FIG. 2 is a flowchart of a method of providing code by using a generative Al model, according to an embodiment of the disclosure.

Operations, performed by the electronic device 100, of providing code will be briefly described with reference to FIG. 2, and a detailed description of each of the operations will be described with reference to the following drawings.

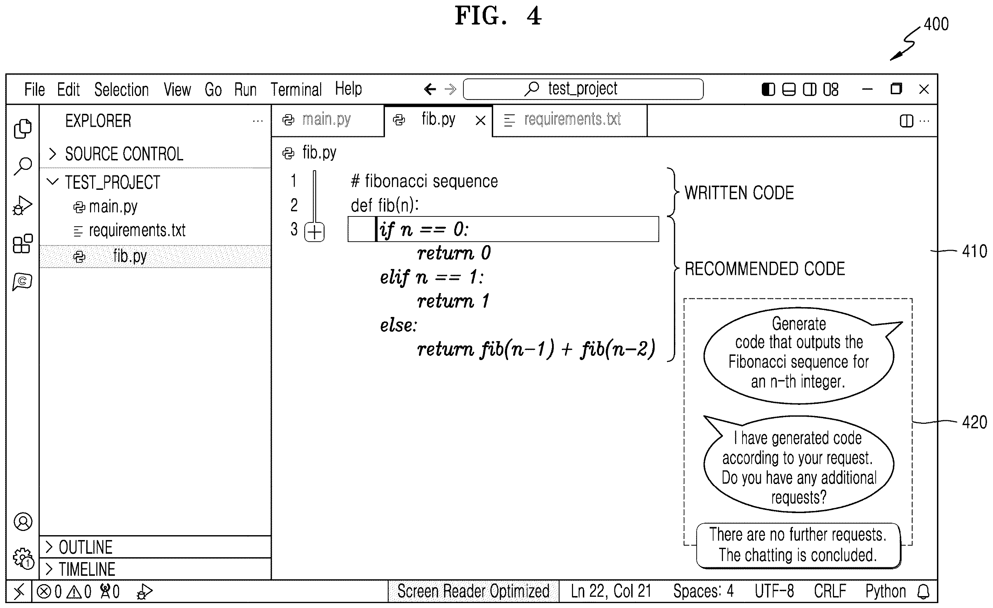

In operation S210, the method may include obtaining a user input corresponding to a first document. For example, the electronic device 100 may obtain a user input for code generation included in a target document. According to an embodiment of the disclosure, the target document may include a document including generated code. According to an embodiment of the disclosure, the user input may include at least one of an input of correcting code in the target document or a request regarding the code in the target document. An operation, performed by an electronic device, of obtaining a user input, according to an embodiment of the disclosure, will be described in detail with reference to FIGS. 4, 5, 12, and 14.

In operation S220, the method may include obtaining first context information for code generation, based on the user input. For example, the electronic device 100 may obtain context information available for code generation, based on the user input.

According to an embodiment of the disclosure, the context information may include, but is not limited to, at least one of information included in the target document, information included in a reference document, or information included in a document written by another user in a group that includes the user of the target document. Information included in a document may include code or comment.

According to an embodiment of the disclosure, the code may include text written according to a programming language to cause the electronic device to perform a specific operation. According to an embodiment of the disclosure, the comment may refer to text included in a document that does not affect an operation of the electronic device. For example, the comment may be included in the document to aid understanding of the code. For example, the comment may include text representing a description of an operation of the code in a human language rather than a programming language.

According to an embodiment of the disclosure, the reference document may include a document referred to by the code of the target document. In an example case in which the code of the target document refers to code written in another document, another document including the referred to code may be referred to as the reference document.

According to an embodiment of the disclosure, the electronic device 100 may determine the context information available for code generation, based on at least one of the user input or the target document. The electronic device 100 may obtain the determined context information from at least one of the target document or the reference document.

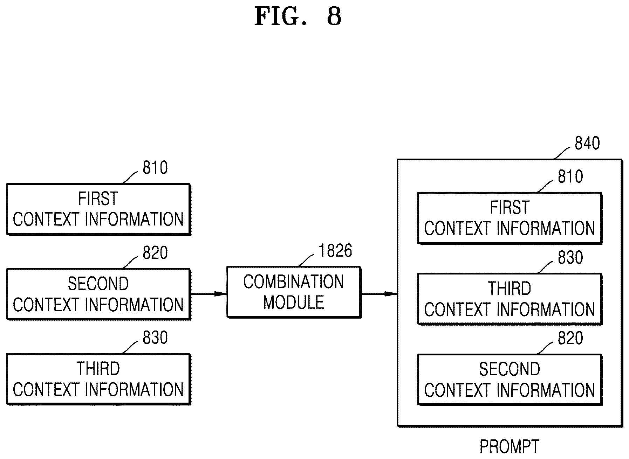

In operation S230, the method may include generating a first prompt for code generation, based on the first context information and the user input. For example, the electronic device 100 may generate a first prompt for code generation, based on the context information and the user input. According to an embodiment of the disclosure, the first prompt may include at least one of the context information or the user input. The first prompt according to an embodiment of the disclosure will be described in detail with reference to FIG. 8 and FIGS. 8 through14.

In operation S240, the method may include selecting, from the first context information, second context information according to priority information. For example, based on a length of the first prompt being greater than a threshold value, the electronic device 100 may select, from the context information, information for generating a second prompt summarizing the first prompt according to priority information. In an example case in which the length of the first prompt is greater than the threshold value, the electronic device 100 may select the information for use in generating the second prompt, from the context information. For example, in response to a determination that the length of the first prompt is greater than the threshold value, the electronic device 100 may select the information for use in generating the second prompt, from the context information.

According to an embodiment of the disclosure, the priority information may include an order regarding context information. For example, the priority information may include at least one of an order regarding context information that is preferentially processed when summarization is performed, or context information on which summarization is not performed. For example, a portion of the context information of the first prompt may not be summarized, and only the remaining context information may be summarized. For example, a first portion of the context information of the first prompt may not be summarized, and a second portion context information may be summarized. According to an embodiment, the priority information may indicate that a priority is set based on importance of context information. For example, the priority may be set higher as importance of context information decreases. In this case, the priority may include the order of pieces of context information that are summarized. The priority may include information about context information that is not summarized. According to an embodiment of the disclosure, the priority may be referred to as, but is not limited to, a summary order.

In operation S250, the method may include generating a second prompt corresponding to the first prompt based on the second context information and the user input. For example, the electronic device 100 may generate the second prompt in which the first prompt has been summarized, based on the selected context information and the user input. According to an embodiment of the disclosure, the electronic device 100 may summarize or delete the selected context information in operation S250.

According to an embodiment of the disclosure, the electronic device 100 may generate the second prompt by summarizing or deleting at least a portion of the context information included in the first prompt. According to an embodiment of the disclosure, the electronic device 100 may generate the second prompt from the first prompt by using the generative Al model.

In operation S260, the method may include transmitting the first prompt or the second prompt. For example, the electronic device 100 may transmit the first prompt or the second prompt to a server. For example, the server may be a device that includes the generative AI model for code generation.

In operation S270, the method may include receiving recommended code generated using the generative Al model based on the first prompt or the second prompt. For example, the electronic device 100 may receive code generated through the generative Al model according to the first prompt or the second prompt from the server and provide the code. For example, the server may input the first prompt or the second prompt to the generative Al model to generate code. The electronic device 100 may provide the code generated by the generative AI model through the display.

According to an embodiment of the disclosure, the method of providing code does not necessarily include operations S210 through S270. At least some of operations S210 through S270 may be omitted, or some operations may be further included.

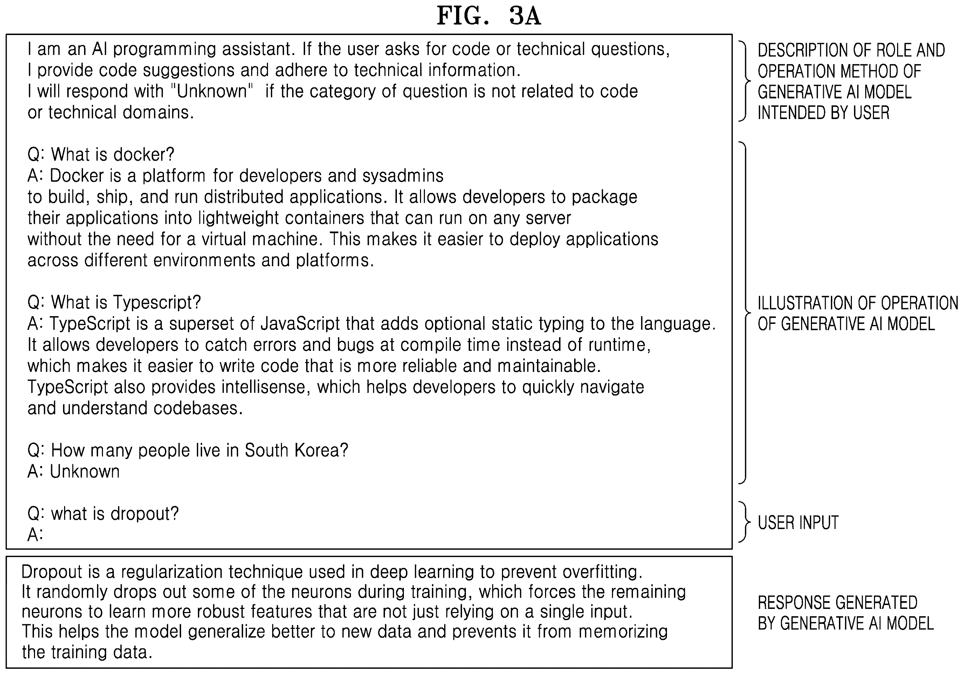

FIG. 3A is a diagram for describing a prompt regarding a generative AI model, according to an embodiment of the disclosure.

The prompt may refer to information provided to the generative Al model in order to obtain an answer intended by a user by using the generative Al model. The generative Al model may generate a response, based on information included in the prompt.

According to an embodiment of the disclosure, the prompt may include a role. For example, the prompt may include text associated with the role of a generative Al (e.g., a Q&A chatbot), "I am an AI programming assistant.". The role of a generative Al may be set as various roles, for example, prompt engineering and the like. However, embodiments are not limited thereto.

According to an embodiment of the disclosure, the prompt may include a task. The task may include information associated with the goal of the generative Al. For example, the prompt may include text associated with the task of the generative AI, "If the user asks for code or technical questions, I provide code suggestions and adhere to technical information." The task of the generative Al may be set as various tasks, for example, prompt summarization and the like. However, embodiments of the disclosure are not limited thereto.

According to an embodiment of the disclosure, the prompt may include constraints. The constraints may include a specific request for a response from the generative Al model. For example, the prompt may include text associated with the constraints of the generative Al, "I will respond with 'Unknown' if the category of question is not related to code or technical domains." The constraints of the generative AI may be set as various constraints, for example, limits on the length or complexity of a response. However, embodiments of the disclosure are not limited thereto.

According to an embodiment of the disclosure, the prompt may include an example. The example may include example information associated with a user request. For example, the prompt may include text associated with an example of an operation of the generative Al, "Q: What is docker? A: Docker is a platform for developers and sysadmins to build, ship, and run distributed applications." For example, the prompt may include text associated with an example of the constraints of the generative AI, "Q: How many people live in South Korea? A: Unknown".

According to an embodiment of the disclosure, the prompt may include a request. A user request may include information about a query requesting a response from the generative Al model. For example, the prompt may include text associated with a user request of the generative AI, "Q: What is dropout?".

According to an embodiment of the disclosure, the generative Al model may provide a response to the prompt. For example, the generative Al model may generate response text to a user request, "Dropout is a regularization technique used in deep learning to prevent overfitting."

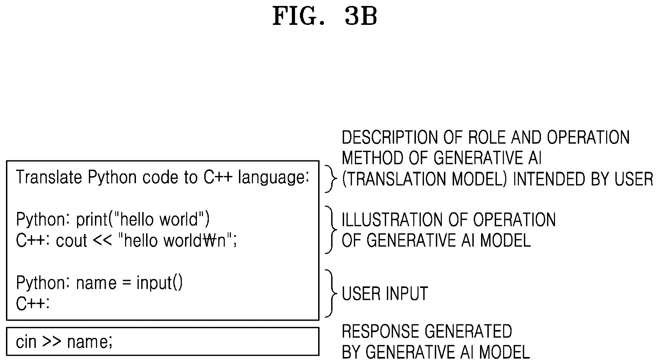

FIG. 3A illustrates that the prompt includes only text written in a human language. However, embodiments of the disclosure are not limited thereto, and the prompt may include various types of natural languages. For example, as will be described later with reference to FIG. 3B, the prompt may include text written in a programming language.

FIG. 3B is a diagram for describing a prompt regarding a generative AI model, according to an embodiment of the disclosure.

According to an embodiment of the disclosure, the prompt may include a task. For example, the prompt may include text associated with a user request of the generative Al, "Translate Python code to C++ language:". The generative Al model according to an embodiment of the disclosure changing code written in a first programming language into code written in a second programming language may be referred to as a translation function.

According to an embodiment of the disclosure, the prompt may include an example. For example, the prompt may include text associated with an example of an operation of the generative AI, "Python: print("hello world") C++: cout << "hello world\n";". In other words, the prompt may include an example where Python code "print("hello world")" may be translated into C++ language "cout << "hello world\n";"

According to an embodiment of the disclosure, the prompt may include a request. For example, the prompt may include text associated with a user request of the generative Al, "Python: name = input() C++:". In other words, the prompt may include a user request to translate the Python code "name = input()" into a C++ language. According to an embodiment of the disclosure, the generative AI model may provide a response to the prompt. For example, the generative AI model may generate response text to a user request, "cin >> name;".

However, the disclosure is not limited thereto, and as such, the prompt is not limited to including only the information described above with reference to FIGS. 3A and 3B, and may omit some information or may further include additional information.

FIG. 4 is a diagram for explaining a user interface that provides code by using a generative AI model, according to an embodiment of the disclosure.

FIG. 4 illustrates a user interface (UI) providing code, according to an embodiment of the disclosure. The UI may include a first UI 400 representing an integrated development environment. The first UI 400 may include at least one of a second UI 410 displaying code, or a third UI 420 displaying chatting. The UI may be displayed through the display of the electronic device 100, but embodiments of the disclosure are not limited thereto. The UI may be displayed through various types of electronic devices including displays.

According to an embodiment of the disclosure, the first UI 400 may represent an integrated development environment. The integrated development environment may refer to a program or service in which a user writes code. The first UI 400 may include, for example, a target document, a project including the target document, and other documents included in the project. For example, the first UI 400 may include a target document "fib.py", a project "test_project" including the target document, and another document "main.py" included in the project.

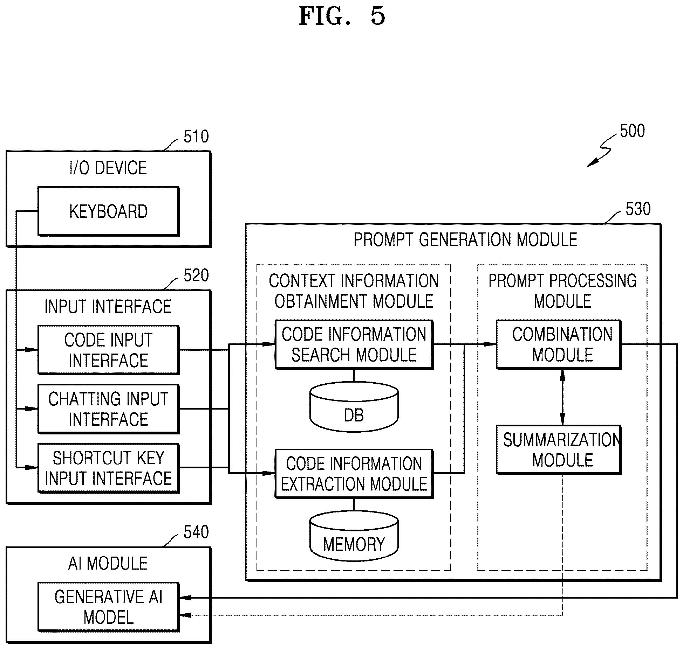

According to an embodiment of the disclosure, the second UI 410 may display an input obtained through a code input interface of FIG. 5. The third UI 420 may display an input obtained through a chatting input interface of FIG. 5. According to an embodiment of the disclosure, the code input interface may include an interface for obtaining an input regarding code. According to an embodiment of the disclosure, the chatting input interface may include an interface for obtaining an input regarding chatting. The code input interface and the chatting input interface according to an embodiment of the disclosure will be described later with reference to FIG. 5.

According to an embodiment of the disclosure, the second UI 410 may include an area representing the code of the target document. According to an embodiment of the disclosure, the second UI 410 may display a written code. For example, the second UI 410 may include text regarding a function defining a Fibonacci sequence. "#fibonacci sequence" may refer to a comment included in the target document, and "def fib(n):" may refer to code that defines a function with a variable "n" and a function name "fib".

According to an embodiment of the disclosure, the second UI 410 may display a recommendation code generated based on the written code or comment. The recommendation codes may be generated using the generative AI model according to the written code or comment. For example, the recommendation code may be generated using at least some of the written code "def fib(n)" or "# fibonacci sequence". The recommendation code may be a code block including multiple lines of code for an operation of a function. For example, referring to FIG. 4, the recommendation code may include a code block written in 6 lines.

According to an embodiment of the disclosure, the second UI 410 may display a recommendation code generated based on a chatting input. For example, the recommendation code may be generated using a chatting input displayed on the third UI 420. The third UI 420 may display an interaction including a request and a response between the user and the electronic device 100. The request may refer to an input from a user requesting a specific operation from the electronic device 100. For example, the request may include text "Generate code that outputs the Fibonacci sequence for an n-th integer." The response may refer to an output of the electronic device 100 in response to the request. For example, the response may include text "I have generated code according to your request. Do you have any additional requests?" For example, the response may include an output that displays the recommendation code on the second UI 410. The recommendation codes may be generated using the generative Al model according to the chatting input.

FIG. 5 is a block diagram of a system for providing code by using a generative Al model, according to an embodiment of the disclosure.

FIG. 5 illustrates a system 500 for providing code by using the generative Al model, according to an embodiment of the disclosure. The system 500 may include at least one of an input/output (I/O) device 510, an input interface 520, a prompt generation module 530, or an Al module 540. However, the disclosure is not limited thereto, and as such, according to another embodiment, one or more other components may added and/or one or more components may be omitted.

According to an embodiment of the disclosure, the I/O device 510 may include a keyboard. The keyboard may include an input device including a plurality of keys. The keyboard may generate a signal from a pressure applied to each key. The keyboard may transmit, to an electronic device, the signal associated with the key to which pressure has been applied. According to an embodiment of the disclosure, the I/O device 510 may be a component included in the electronic device 100 or a special device connected to the electronic device 100.

According to an embodiment of the disclosure, the system 500 may obtain an input signal by using the I/O device 510. The input signal may be correspond to a user input. The I/O device 510 may transmit the input signal to the input interface 520. According to an embodiment of the disclosure, the input interface 520 may obtain an input signal from the I/O device 510. The input interface 520 may include at least one of a code input interface, a chatting input interface, or a shortcut key input interface.

According to an embodiment of the disclosure, the code input interface may obtain a user input for writing code or correcting code. For example, the code input interface may obtain a user input of adding, deleting, or modifying code. For example, the user input of adding code may include a user input of adding characters. The characters may include regular characters (such as, the alphabet), spaces, or special characters (such as, "\"). The user input of deleting code may include a user input of removing at least a portion of the written code. The user input of modifying code may include a user input of removing at least a portion of the written code and inputting new characters.

According to an embodiment of the disclosure, the chatting input interface may obtain a user input including a request regarding code generation. For example, as described above with reference to FIG. 4, the user input may include a request regarding generation of a specific code. The chatting input interface may obtain a user input when a chatting service is executed or while the chatting service is being executed. The chatting input interface may be executed using predetermined shortcut keys or may be executed using another input device (e.g., a mouse).

According to an embodiment of the disclosure, the shortcut key input interface may obtain a user input including a shortcut key input regarding code generation. For example, the shortcut key input interface may obtain a user input regarding a predetermined shortcut key or a combination of shortcut keys. The shortcut key may be set as any key or a combination of keys other than a key that corrects characters.

The input interface 520 may transmit the user input to the prompt generation module 530 based on the obtained user input. For example, the input interface 520 may transmit the user input to the prompt generation module 530 in response to the obtained user input. According to an embodiment of the disclosure, the prompt generation module 530 may include a context information obtainment module and a prompt processing module. According to an embodiment of the disclosure, the input interface 520 may transmit the user input to at least one of the context information obtainment module or the prompt processing module of the prompt generation module 530. According to an embodiment of the disclosure, the prompt generation module 530 may be implemented by a processor of the electronic device 100 executing program or instructions stored in memory of the electronic device 100. According to an embodiment of the disclosure, an operation or process described as being performed by the prompt generation module 530 may be understood as being performed by the processor of the electronic device 100. For example, the processor of the electronic device 100 may perform at least one of the prompt generation module 530, a context information obtainment module, a code information search module, a code information extraction module, a prompt processing module, a combination module, or a summarization module. However, embodiments of the disclosure are not limited thereto, and the prompt generation module 530 may be performed by the processor of the server 110. According to an embodiment of the disclosure, detailed components or modules included in the prompt generation module 530 may be considered as a software unit that performs a specific function or role in an overall program that generates a prompt, based on a user's input.

According to an embodiment of the disclosure, the context information obtainment module may include a code information search module and/or a code information extraction module.

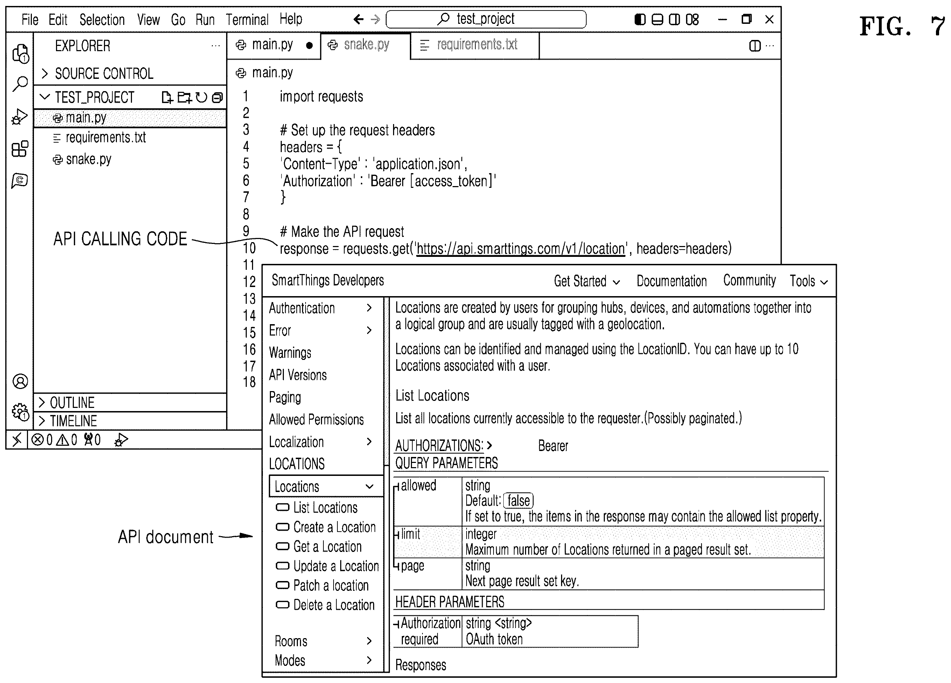

According to an embodiment of the disclosure, the code information search module may obtain context information from a database. For example, the code information search module may search and obtain the context information from an external network. According to an embodiment of the disclosure, the database may not be included in the context information obtainment module. For example, the database may be provided external to the electronic device 100. A process of obtaining the context information, and the type of context information will be described in detail with reference to FIG. 7.

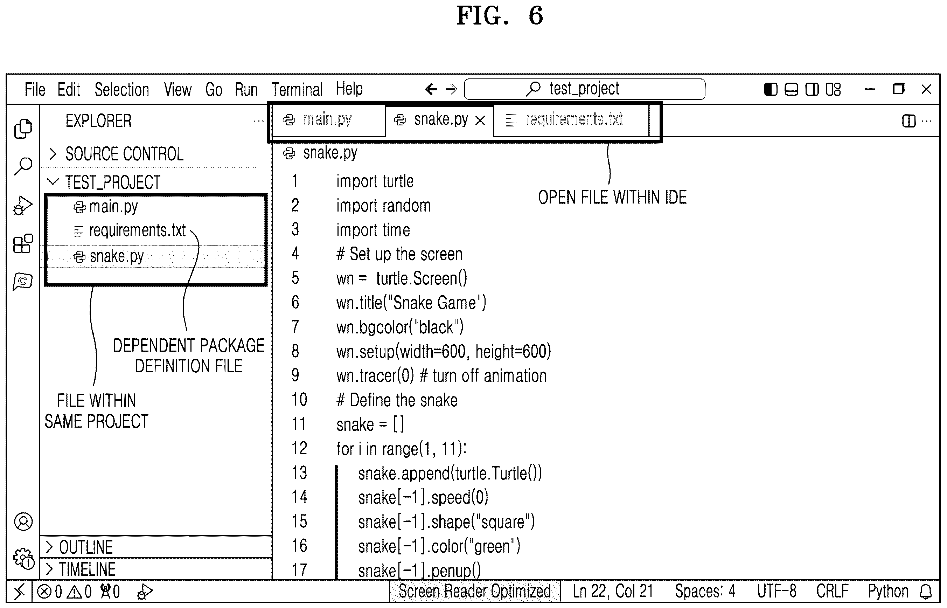

According to an embodiment of the disclosure, the code information extraction module may obtain the context information from the memory. For example, the code information extraction module may extract pieces of context information from the integrated development environment associated with the target document. A process of extracting the context information, and a type of context information will be described in detail with reference to FIG. 6.

According to an embodiment of the disclosure, the context information obtainment module may transmit the context information to the prompt processing module. The prompt processing module may include a combination module and a summarization module.

According to an embodiment of the disclosure, the combination module may generate a prompt, based on the obtained context information. For example, the prompt may be generated by merging or concatenating the context information. The prompt may include at least one of the context information, a user input, or target code. In an example case in which the prompt generated by the combination module is longer than a threshold, the combination module may transmit the prompt to the summarization module. In an example case in which the prompt generated by the combination module is shorter than the threshold, the combination module may not transmit the prompt to the summarization module but may determine a final prompt. A process of combining the prompt, according to an embodiment of the disclosure, will be described in more detail later with reference to FIG. 8.

According to an embodiment of the disclosure, the summarization module may summarize the prompt. The summarization module may summarize the prompt according to a predetermined rule. The summarization module may summarize some of pieces of context information of the prompt. The summarization module may determine a priority corresponding to the pieces of context information included in the prompt, and summarize the context information according to the priority information. For example, each of the pieces of context information included in the prompt may be assigned a priority, and the summarization module summarize the context information based on the priority assigned to each of the pieces of context information. The summarization module may delete some of the pieces of context information of the prompt.

According to an embodiment of the disclosure, the summarization module may summarize the context information by using the Al module 540. For example, the summarization module may transmit the prompt or selected context information to an external server, and may receive the prompt or context information summarized using a generative Al model.

According to an embodiment of the disclosure, the Al module 540 may include the generative Al model. The Al module 540 may generate code by using the prompt. The Al module 540 may generate code corresponding to a user input by using the prompt as an input.

According to an embodiment of the disclosure, the electronic device 100 may include at least one of the I/O device 510, the input interface 520, the prompt generation module 530, or the Al module 540. However, embodiments of the disclosure are not limited thereto, and some of the I/O device 510, the input interface 520, the prompt creation module 530, or the Al module 540 may be implemented through another electronic device 100.

FIG. 6 is a diagram for describing a process of extracting code information, according to an embodiment of the disclosure.

According to an embodiment of the disclosure, the electronic device 100 may obtain context information. The electronic device 100 may obtain the context information from the target document or the reference document by executing the code information extraction module. The electronic device 100 may obtain the context information from code or comment included in the target document or the reference document.

According to an embodiment of the disclosure, the electronic device 100 may obtain the context information from the target document. The electronic device 100 may obtain the context information, based on an indicator (e.g., a mouse cursor or a keyboard cursor). The electronic device 100 may obtain context information including code or comment located in front of the indicator. The electronic device 100 may obtain context information including code or comment located behind the indicator.

According to an embodiment of the disclosure, the electronic device 100 may obtain the context information from an open document. The electronic device 100 may identify a document that is open in the integrated development environment. For example, the electronic device 100 may obtain a list of open documents through an integrated development environment Application Programming Interface (API). The electronic device 100 may obtain the context information from the identified open document. Referring to FIG. 6, the electronic device 100 may obtain context data including code or comment included in files "main.py", "snake.py", and/or "requirements.txt" opened to the integrated development environment.

According to an embodiment of the disclosure, the electronic device 100 may obtain the context information from a reference document included in a project, such as a target document. Referring to FIG. 6, a target document "snake.py" is included together with "main.py" and "requirements.txt" in the same project "TEST_PROJECT". The electronic device 100 may obtain context data including code or comment of "main.py" and "requirements.txt" included together with the target document "snake.py" in the same project.

According to an embodiment of the disclosure, the electronic device 100 may obtain the context information from a dependency document. The dependency document may refer to a document containing a package, a library, a task, and/or an instruction that are needed to execute a project. For example, the dependency document may include "Requirement", "Makefile", and "dockerfile". Referring to FIG. 6, the dependency document may include "requirements.txt". The electronic device 100 may obtain context information including code or comment corresponding to a package, a library, and/or an API function included in the dependency document.

According to an embodiment of the disclosure, the electronic device 100 may obtain the context information from a document to which the target document refers. For example, the electronic device 100 may obtain context information including code or comment included in a document to which the target document refers through "import" or "include".

According to an embodiment of the disclosure, the electronic device 100 may obtain all of the code or comment included in the target document as the context information. According to an embodiment of the disclosure, the electronic device 100 may obtain, as the context information, some information representing the code or comment included in the target document. In an example case in which the amount of code information included in the document is large, the electronic device 100 may obtain only some information included in the document as the context information. For example, in a case in which the amount of code information included in the document is larger than a reference value, the electronic device 100 may obtain the context information based on only a portion of document. The amount of code information may be include, but is not limited to, a size of the document or a number of lines of code in the document. The electronic device 100 may obtain, as the context data, a docstring associated with the code included in the document. The docstring may include a comment associated with a module, function, class, or method definition included in the code. The electronic device 100 may obtain a function signature as the context information. The function signature may include a list of parameters specified in the function.

FIG. 7 is a diagram for describing a process of searching for code information, according to an embodiment of the disclosure.

According to an embodiment of the disclosure, the electronic device 100 may obtain context information. The electronic device 100 may obtain the context information from the reference document by executing the code information search module. The electronic device 100 may obtain the context information from code or comment included in the reference document.

According to an embodiment of the disclosure, the electronic device 100 may identify the code representing the reference document. Referring to FIG. 7, code "response = requests.get('https://api.smartthings.com/v1/locations', headers=headers)" included in the target document may refer to code that calls the reference document. In other words, an API document corresponding to an Internet address 'https://api.smartthings.com/v1/locations' may be the target document. The API document may include functions, parameters, functions, and/or example code.

According to an embodiment of the disclosure, the electronic device 100 may obtain the reference document through an index representing the reference document included in the code. The index may represent preset code (e.g., a library or a package). The electronic device 100 may obtain the reference document corresponding to the index. For example, the electronic device 100 may obtain the reference document corresponding to the index by using a search engine.

According to an embodiment of the disclosure, the electronic device 100 may obtain the context information from a document written by another user of an organization that includes a user. The electronic device 100 may identify the organization including the user. The electronic device 100 may identify whether there is code (or document) similar to or identical to target code (or target document) among code (or documents) written by other users included in the organization. For example, the electronic device 100 may search for a function similar to or identical to the title of a function. The electronic device 100 may obtain context information including code similar to or identical to the target code.

The electronic device 100 may obtain the reference document. For example, the electronic device 100 may obtain, as the context information, a reference document including at least one of code or comment through a reference path included in the target document. The electronic device 100 may obtain at least some of the code or comment included in the reference document. According to an embodiment of the disclosure, the electronic device 100 may obtain all of the code or comment included in the reference document as the context information. According to an embodiment of the disclosure, the electronic device 100 may obtain, as the context information, some information representing the code or comment included in the reference document.

FIG. 8 is a block diagram for explaining a process of combining context information, according to an embodiment of the disclosure.

According to an embodiment of the disclosure, the electronic device 100 may generate a prompt 840 including context information. For example, the context information may include first context information 810, second context information 820, and third context information 830. The electronic device 100 may execute the combination module 1826 to generate a prompt. The first, second, and third context information 810, 820, and 830 may be obtained by the electronic device 100 by using the code information extraction module or the code information search module. The context information may include code or comment.

According to an embodiment of the disclosure, the electronic device 100 may generate the prompt 840 by merging or concatenating the first, second, and third context information 810, 820, and 830.

According to an embodiment of the disclosure, the electronic device 100 may merge the first, second, and third context information 810, 820, and 830 according to priority information. For example, referring to FIG. 8, the prompt 840 may include the first context information 810, the third context information 830, and the second context information 820 in this stated order. According to an embodiment of the disclosure, the electronic device 100 may align the first, second, and third context information 810, 820, and 830 according to priority information. For example, the electronic device 100 may include high-priority context information positioned in the preceding order. However, embodiments of the disclosure are not limited thereto, and the electronic device 100 may include low-priority context information in the front order. The priority may be determined based on the importance of context information. The priority may be determined in an order reverse to the importance of context information. For example, the priority may be set higher as the importance of context information decreases. For example, the importance of the context information obtained from the target document may be determined to be highest, and the priority thereof may be determined to be low. The electronic device 100 may determine low-priority context information as important information, and may not summarize or delete the low-priority context information.

According to an embodiment of the disclosure, the electronic device 100 may generate the prompt 840 by merging the first, second, and third context information 810, 820, and 830 without aligning them. For example, a prompt may include context information in an obtainment order, separate from the priority information.

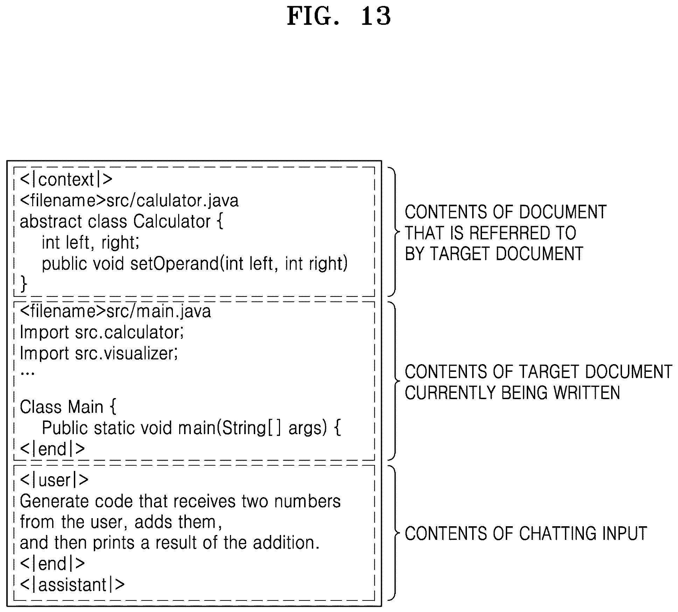

According to an embodiment of the disclosure, the electronic device 100 may generate a prompt including a user input. For example, the electronic device 100 may generate a prompt to include a chatting input. A prompt including a chatting input, according to an embodiment of the disclosure, will be described in more detail later with reference to FIG. 13.

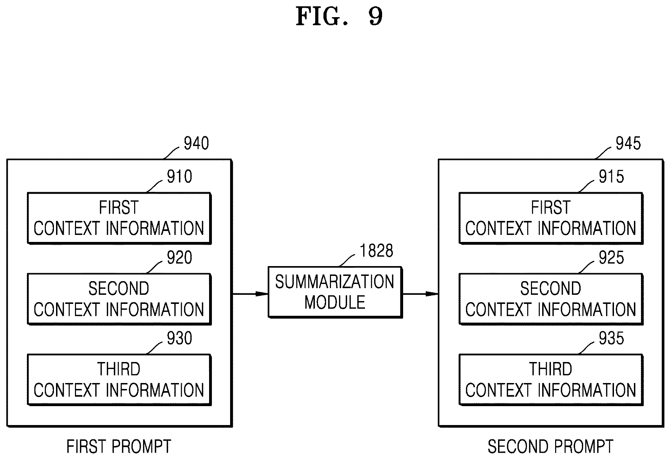

FIG. 9 is a block diagram for explaining a process of summarizing a prompt, according to an embodiment of the disclosure.

According to an embodiment of the disclosure, the electronic device 100 may generate a first prompt 940 including context information. For example, the context information may include first context information 910, second context information 920, and third context information 930The electronic device 100 may execute the summarization module 1828 to summarize the first prompt 940. For convenience of description, a prompt not yet summarized by the summarization module 1828 is referred to as a first prompt, and a prompt summarized by the summarization module 1828 is referred to as a second prompt.

According to an embodiment of the disclosure, the electronic device 100 may generate a second prompt 945, which is a result of summarizing the first prompt 940. The electronic device 100 may summarize or delete at least some of the first, second, and third context information 910, 920, and 930 of the first prompt 940. At least some of first, second, and third context information 915, 925, and 935 of the second prompt 945 may be a summary of the first, second, and third context information 910, 920, and 930 of the first prompt 940. For example, context information may be summarized to include important information, such as the name of a function, parameters, and a output of the function.

According to an embodiment of the disclosure, the electronic device 100 may summarize the prompt not to include the same context information redundantly. In an example case in which some of the pieces of context information included in the first prompt 940 are duplicated, the electronic device 100 may delete the some context information to prevent duplication.

According to an embodiment of the disclosure, the electronic device 100 may generate the second prompt 945 without summarizing or deleting the some context information of the first prompt 940. For example, highly-important context information may need the original context information without summarization. The electronic device 100 may generate the second prompt 945 without summarizing or deleting the code or comment of the target document. For example, the electronic device 100 may not summarize or delete code corresponding to an indicator (e.g., codes or comments located in front of or behind the indicator).

According to an embodiment of the disclosure, the electronic device 100 may repeatedly perform summarization until a length of the summarized prompt becomes less than a threshold value. The electronic device 100 may identify the length of the prompt before summarizing the prompt, and perform summarization based on the length of the prompt being greater than the threshold value.

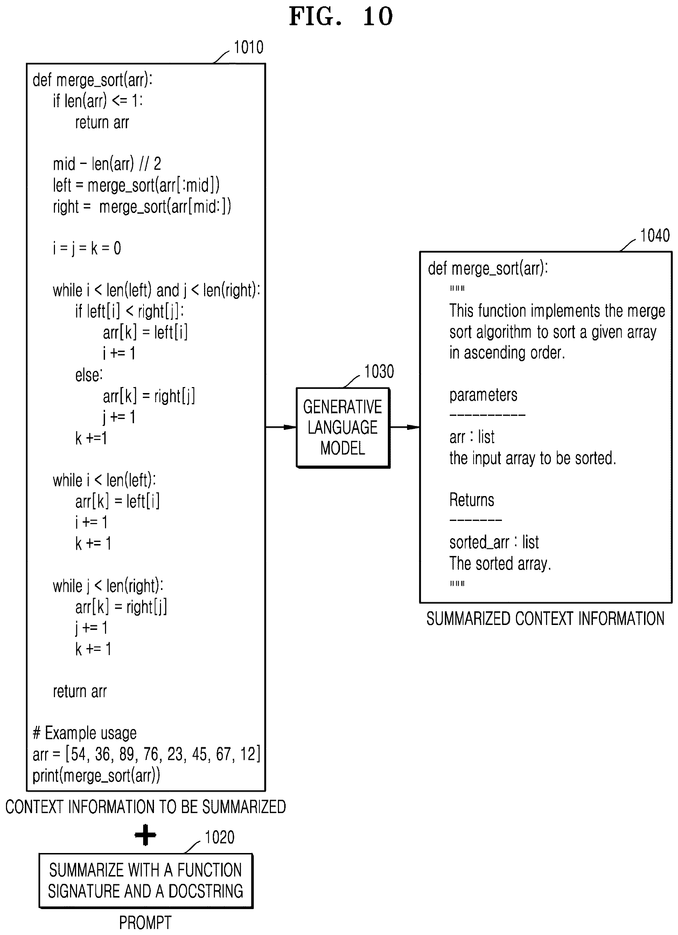

FIG. 10 is a view for explaining a process of summarizing a prompt by using a generative language model, according to an embodiment of the disclosure.

According to an embodiment of the disclosure, the electronic device 100 may summarize the prompt by using a generative language model 1030. The generative language model 1030 may be stored in the electronic device 100 or in a server connected to the electronic device 100.

According to an embodiment of the disclosure, the generative language model 1030 may generate summarized context information 1040 by inputting a prompt including context information 1010 and a request 1020. For example, the context information 1010 may include code or comment.

According to an embodiment of the disclosure, the request 1020 may include a task in which the generative language model performs summarization. For example, the request 1020 may include a task "Summarize with a function signature and a docstring." The generative language model 1030 may generate the summarized context information 1040 from the context information 1010 according to the request 1020. For example, the summarized context information 1040 may include a function name "merge_sort" and a parameter "arr", which are function signatures included in the context information 1010, and a docstring associated with an operation of the function.

According to an embodiment of the disclosure, the electronic device 100 may select some of the context information of the prompt, and may input the selected context information to the generative language model. According to an embodiment of the disclosure, the electronic device 100 may input all of the context information to the generative language model without selecting some of the context information of the prompt. According to an embodiment of the disclosure, the request 1020 may include context information that is to be summarized.

According to an embodiment of the disclosure, the electronic device 100 may summarize various natural languages as well as the code or comment by using the generative language model.

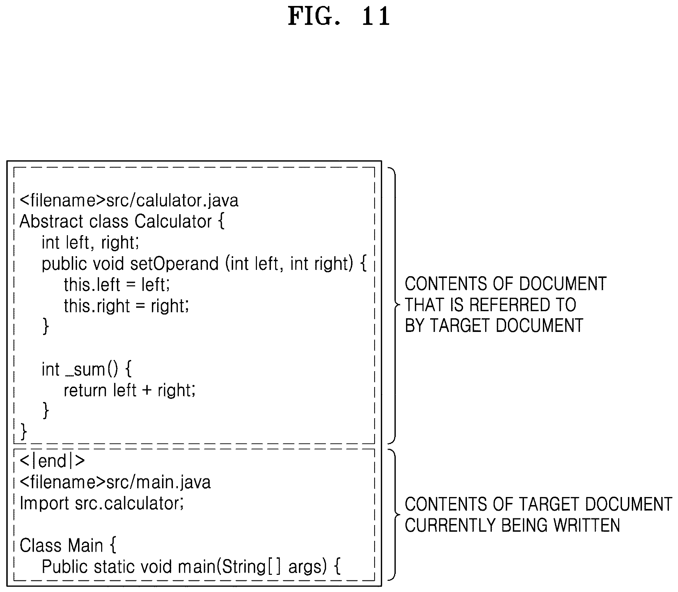

FIG. 11 is a view illustrating a prompt that is provided by a generative AI model, according to an embodiment of the disclosure.

According to an embodiment of the disclosure, a prompt according to a user input or shortcut key input to correct code is shown in FIG. 11.

According to an embodiment of the disclosure, the prompt may include context information. The context information may include at least one of code or comment included in a target document, a reference document, another document within the same project, and/or an external document.

The prompt may include the code of the reference document as the context information. Referring to FIG. 11, information included between <context> and <end> may refer to context information. The context information may include a location of the reference document, the code of the reference document, and/or the comment of the reference document. The location of the reference document may refer to a path where the reference document is stored. For example, "src/calculator.java" may represent the location (and name) of the reference document.

According to an embodiment of the disclosure, the prompt may include request information. The request information may include a location of the target document and/or target code. Referring to FIG. 11, information included behind <filename> may refer to the request information.

According to an embodiment of the disclosure, the target code may be determined based on a user input. For example, the target code may refer to code associated with the previous user input. In an example case in which the previous user input is related to at least a portion of "Public static void main(String[] args) {", the target code may be code related to "Public static void main(String[] args) {".

According to an embodiment of the disclosure, the target code may be determined based on an indicator included in a user interface. For example, the target code may be determined as code indicated by the location of a keyboard cursor of the user interface. In an example case in which the keyboard cursor of the user interface is located at the beginning, middle, or end of of "Public static void main(String[] args) {", the target code may be code related to "Public static void main(String[] args) {".

According to an embodiment of the disclosure, the electronic device 100 may generate a prompt including a user input. According to an embodiment of the disclosure, the electronic device 100 may generate a prompt in response to the elapse of a predetermined time from the time when the user input is last obtained. According to an embodiment of the disclosure, the electronic device 100 may generate a prompt in response to obtainment of a shortcut key input.

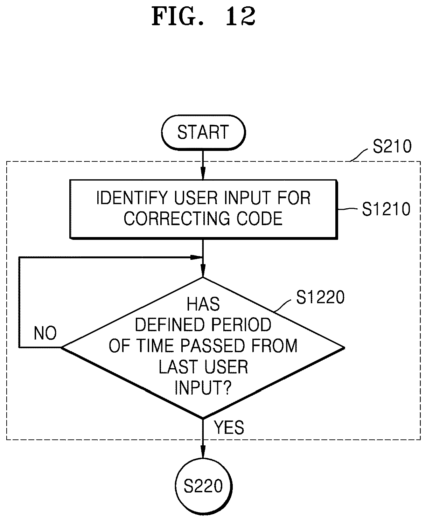

FIG. 12 is a flowchart of an operation of obtaining a user input, according to an embodiment of the disclosure. The flowchart of FIG. 12 includes detailed operations of operation S210 of FIG. 2 according to an embodiment of the disclosure.

Referring to FIG. 12, according to an embodiment of the disclosure, operation S210 may include operation S1210 and operation S1220.

In operation S1210, the method may include identifying a user input for correcting code. For example, the electronic device 100 may identify a user input for correcting code. For example, the electronic device 100 may obtain an input signal for correcting information about the code, through an I/O device. According to an embodiment of the disclosure, the user input may include a user input of correcting code in the target document. The user input of correcting code may include at least one of an input of adding, deleting, or modifying the code in the target document. The user input of correcting code may include a user input of modifying one or more characters of the code.

In operation S1220, the method may include identifying whether a period of time has passed from a defined previous user input. For example, the electronic device 100 may identify whether a defined period of time has passed from the previous user input. The defined period of time may be a predetermined value. In an example case in which the predetermined period of time has not elapsed from the previous user input, the electronic device 100 may not proceed to operation S220, and may wait until the predetermined period of time has elapsed from the previous user input. The predetermined period of time having not elapsed from the previous user input may refer to the electronic device 100 consecutively obtaining user inputs.

In an example case in which the predetermined period of time has passed from the previous user input, the electronic device 100 may proceed to operation S220. According to an embodiment of the disclosure, the electronic device 100 may obtain the context information in response to the absence of an additional user input during the predetermined period of time. For example, the electronic device 100 may not proceed to operation S220 when there is an additional user input within a predetermined period of time (e.g., 0.3 seconds), and may proceed to operation S220 only when there are no additional user inputs for the predetermined period of time.

The electronic device 100 according to an embodiment of the disclosure may generate a first prompt, based on the user input of correcting code and the context information. For example, the electronic device 100 may generate a first prompt including target code including the corrected code and the context information.

According to an embodiment of the disclosure, operation S210 does not necessarily include operations S1210 and S1220 of FIG. 12, and at least some of operations S1210 and S1220 may be omitted or some operations may be further included in operation S210.

FIG. 13 is a view illustrating a prompt that is provided by a generative Al model, according to an embodiment of the disclosure.

According to an embodiment of the disclosure, a prompt according to a user input regarding code generation is shown in FIG. 13.

According to an embodiment of the disclosure, the prompt may include context information. The context information may include at least one of code or comment included in a target document, a reference document, another document within the same project, and/or an external document. The context information has been described with reference to FIG. 11, so a description thereof will be omitted.

According to an embodiment of the disclosure, the prompt include code and/or comment of the target document. For example, referring to FIG. 13, information included between <filename> and <|end|> may refer to the code and/or comment of the target document.

According to an embodiment of the disclosure, the prompt may include the user input. The prompt may include a chatting input. Referring to FIG. 13, the prompt may include the obtained chatting input "Generate code that receives two numbers from the user, adds them, and then prints a result of the addition."

According to an embodiment of the disclosure, the electronic device 100 may generate the prompt, based on the user input. In response to the chatting input being obtained, the electronic device 100 may generate a prompt corresponding to the chatting input. According to an embodiment of the disclosure, the electronic device 100 may determine the priority according to the chatting input. The electronic device 100 may summarize the prompt based on priority information.

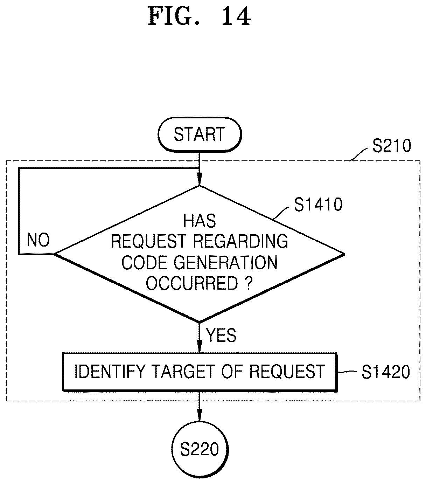

FIG. 14 is a flowchart of an operation of obtaining a user input, according to an embodiment of the disclosure. The flowchart of FIG. 14 includes detailed operations of operation S210 of FIG. 2 according to an embodiment of the disclosure.

Referring to FIG. 14, according to an embodiment of the disclosure, operation S210 may include operation S1410 and operation S1420.

In operation S1410, the method may include identifying a request regarding code generation included in the target document. For example, the electronic device 100 may identify a request regarding code generation included in the target document. According to an embodiment of the disclosure, the request regarding code generation may include, but is not limited to, at least one of a chatting input or a shortcut key input.

According to an embodiment of the disclosure, the electronic device 100 may include a chatting input of requesting for information about code. For example, the user input may include chatting information "Generate code for ~." In other words, the user input may include request information of a user. The chatting input may include a text input that is generated through a special user interface other than a user interface that displays the target document. For example, as described above with reference to FIG. 4, the chatting input may include a text input of requesting code for a function intended by the user through the special user interface.

According to an embodiment of the disclosure, the electronic device 100 may include a shortcut key input of requesting for information about the code. The shortcut key input may include an input unrelated to an input of correcting characters in the target document. For example, the shortcut key input may include a predetermined key (e.g., F9) of a keyboard or a combination (e.g., Shift + enter key) of predetermined keys.

In operation S1420, the method may include identifying a target of request. For example, the electronic device 100 may identify a target of request. The target of request may include target code.

According to an embodiment of the disclosure, the electronic device 100 may identify the target of request associated with the chatting input. For example, in a chatting input asking to provide code for a certain function, the target of request may refer to the certain function.

According to an embodiment of the disclosure, the electronic device 100 may identify the target of request associated with the shortcut key input. The electronic device 100 may identify the target of request, based on the location of the indicator when a shortcut key is input. The indicator may include, but is not limited to, a mouse cursor or a keyboard cursor. In an example case in which the shortcut key is input, the electronic device 100 may identify the target of request according to a predetermined rule according to the location of the indicator.

According to an embodiment of the disclosure, in an example case in which the shortcut key is input and the indicator indicates a start portion of the code, the electronic device 100 may identify a target of request corresponding to the start portion. In an example case in which the shortcut key input is obtained from a very beginning portion of a function, a code block including a plurality of lines of code for implementing the function may be the target of the request.

According to an embodiment of the disclosure, in an example case in which the shortcut key is input and the indicator indicates a middle portion of the code, the electronic device 100 may identify a target of request corresponding to the middle portion. In an example case in which the shortcut key input is obtained from the middle portion of the function (for example, when some code is input), a single line of code indicated by the indicator may be the target of the request.

According to an embodiment of the disclosure, the electronic device 100 may identify the target of the request and then may proceed to operation S220. The electronic device 100 according to an embodiment of the disclosure may generate a first prompt, based on the target of the request and the context information. For example, the electronic device 100 may generate a first prompt including the target of the request and the context information.

According to an embodiment of the disclosure, operation S210 does not necessarily include operations S1410 and S1420 of FIG. 14, and at least some of operations S1410 and S1420 may be omitted or some operations may be further included in operation S210.

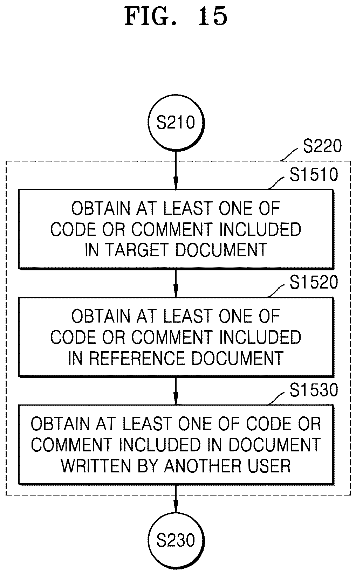

FIG. 15 is a flowchart of an operation of obtaining context information, according to an embodiment of the disclosure. The flowchart of FIG. 15 includes detailed operations of operation S220 of FIG. 2 according to an embodiment of the disclosure.

Referring to FIG. 15, according to an embodiment of the disclosure, operation S220 may include operation S1510, operation S1520, and operation S1530.

In operation S1510, the method may include obtaining at least one of the code or comment included in the target document. For example, the electronic device 100 may obtain at least one of the code or comment included in the target document. According to an embodiment of the disclosure, the context information may include information included in the target document. In other words, the electronic device 100 may obtain context information including at least one of the code or comment included in the target document.

In operation S1520, the method may include obtaining at least one of the code or comment included in a reference document. For example, the electronic device 100 may obtain at least one of the code or comment included in the reference document usable in code generation. According to an embodiment of the disclosure, the context information may include at least one of the code or comment included in the reference document. In other words, the electronic device 100 may obtain the context information including at least one of the code or comment included in the reference document.

According to an embodiment of the disclosure, the reference document may include, but is not limited to, at least one of a document loaded in an integrated development environment (such as, a target document), a document referenced by the target document among one or more documents included in a project including the target document, a package or library referenced by the target document, or an API document referenced by the target document.

In operation S1530, the method may include obtaining at least one of the code or comment included in a document written by another user. For example, the electronic device 100 may obtain at least one of the code or comment included in a document written by another user within a group including the user of the target document. According to an embodiment of the disclosure, the context information may include, but is not limited to, at least one of the code or comment included in the document written by the other user within the group including the user of the target document. For example, the electronic device 100 may identify the group including the user of the target document, and may obtain context information including at least one of code or comment included in a document written by a member of the group. In other words, the electronic device 100 may obtain the context information including at least one of the code or comment included in a document written by another user within a group including the user of the target document.

According to an embodiment of the disclosure, operation S220 does not necessarily include operations S1510 through S1530 of FIG. 15, and at least some of operations S1510 through S1530 may be omitted or some operations may be further included in operation S220. The order of operations S1510 through S1530 may be changed.

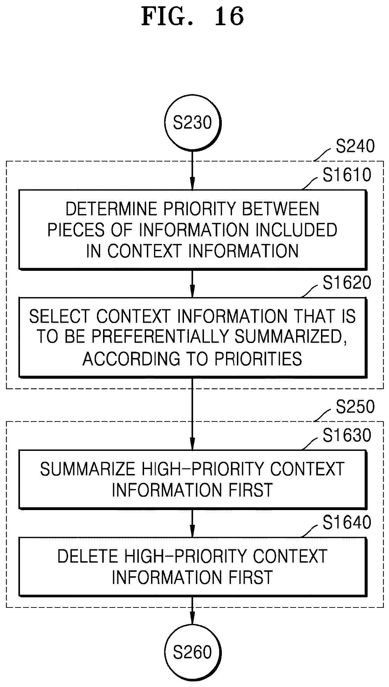

FIG. 16 is a flowchart of an operation of generating a summarized prompt, according to an embodiment of the disclosure. The flowchart of FIG. 12 includes detailed operations of operations S240 and S250 of FIG. 2 according to an embodiment of the disclosure.

Referring to FIG. 16, according to an embodiment of the disclosure, operation S240 may include operation S1610 and operation S1620.

In operation S1610, the method may determining a priority between pieces of information included in the context information. For example, the electronic device 100 may determine a priority between pieces of information included in the context information. The electronic device 100 may determine a priority according to a rule-based procedure. In other words, the electronic device 100 may determine a priority between pieces of information included in the context information, based on a predetermine rule. The electronic device 100 may select information that is to be preferentially summarized based on priority information.

In operation S1620, the method may include selecting context information based on priority information. For example, the electronic device 100 may select context information that is to be preferentially summarized based on priority information. According to an embodiment of the disclosure, the electronic device 100 may first select high-priority context information. According to an embodiment of the disclosure, the electronic device 100 may not select some low-priority context information.

According to an embodiment of the disclosure, operation S250 may include operation S1630 and operation S1640.

In operation S1630, the method may include generating the second prompt by first summarizing the high-priority context information. For example, the electronic device 100 may generate the second prompt by first summarizing the high-priority context information. According to an embodiment of the disclosure, the electronic device 100 may generate the second prompt by first summarizing the high-priority context information until a length of the second prompt becomes less than a threshold value. For example, the electronic device 100 may generate the second prompt by summarizing first context information with a first priority, followed by summarizing second context information with a second priority lower than the first priority and so on. The electronic device 100 may sequentially summarize from the high-priority context information to the low-priority context information. The electronic device 100 may repeat summarization of the context information. For example, the electronic device 100 may repeatedly perform low-level summarization rather than high-level summarization from the beginning. The electronic device 100 may stop the summarization based on a length of the prompt being less than the threshold value.

According to an embodiment of the disclosure, the electronic device 100 may generate the second prompt by using the generative Al model. For example, the electronic device 100 may generate a summarized second prompt by requesting summarization of the first prompt to the generative Al model. The generative Al model may be operated by the electronic device 100 or a server connected to the electronic device 100. The electronic device 100 may generate the second prompt by transmitting at least one of the first prompt or the context information selected in operation S240 to the server and receiving a result of the summarization through the server's generative AI model.

In operation S1640, the method may include deleting the high-priority context information. For example, the electronic device 100 may generate the second prompt by first deleting the high-priority context information. According to an embodiment of the disclosure, in an example case in which a length of the summarized second prompt is greater than the threshold value, the electronic device 100 may generate the second prompt by first deleting the high-priority context information. According to an embodiment of the disclosure, the electronic device 100 may delete the context information after summarizing the context information. For example, the electronic device 100 may delete the context information when the length of the prompt is greater than the threshold value despite summarizing selected pieces of context information. According to an embodiment of the disclosure, the electronic device 100 may delete the context information without summarizing the context information. For example, the electronic device 100 may generate the second prompt by deleting the context information based on priority information, without summarization.

According to an embodiment of the disclosure, operation S240 does not necessarily include operations S1610 and S1620 of FIG. 16. Likewise, operation S250 does not necessarily include operations S1630 and S1640 of FIG. 16. At least some of operations S1610 through S1640 may be omitted, or some operations may be further included. The order of operations S1630 and S1640 may be changed.

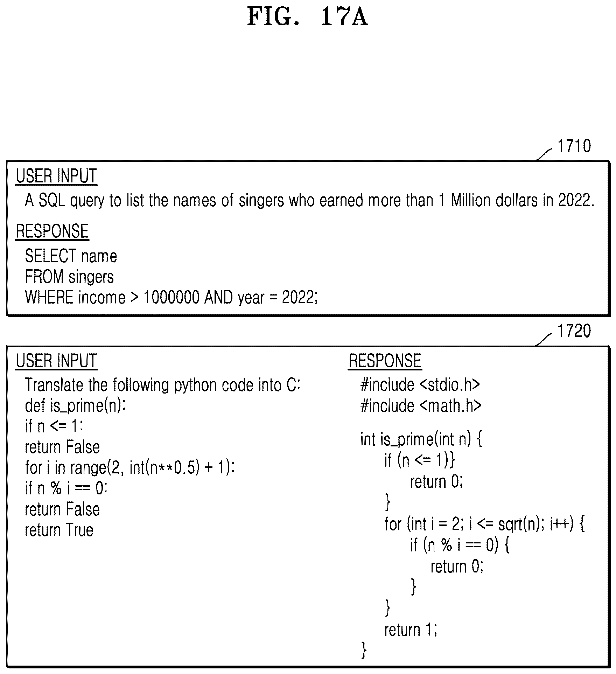

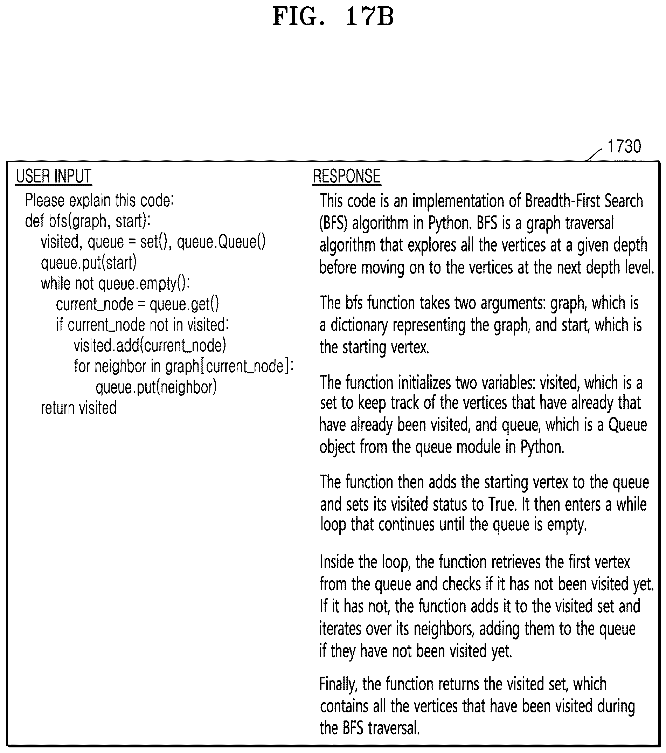

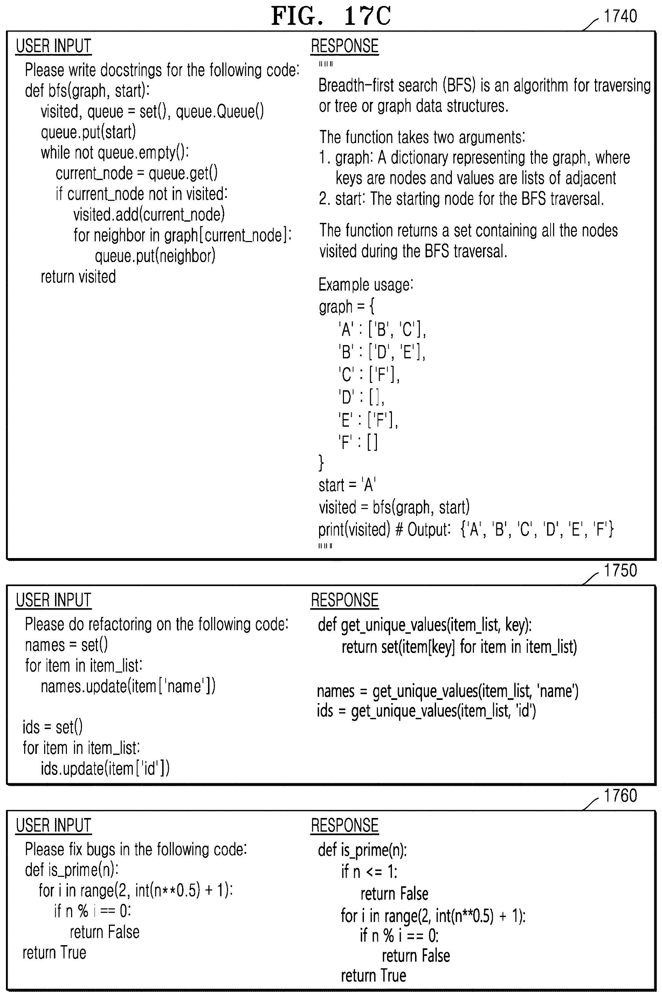

A system in which the electronic device 100 provides code by using a generative AI model according to an embodiment of the disclosure will now be described with reference to FIGS. 17A, 17B, and 17C.

FIG. 17A is a diagram for explaining a system that provides code by using a generative AI model, according to an embodiment of the disclosure.

According to an embodiment of the disclosure, the electronic device 100 may provide various services that provide code by using the generative AI model.

Referring to FIG. 17A, according to an embodiment of the disclosure, the electronic device 100 may perform a service 1710 for generating code. For example, the electronic device 100 may generate a prompt according to a user input for requesting to generate certain code. The electronic device 100 may input the generated prompt to the generative Al model to obtain a response including code written in a programming language. The electronic device 100 may generate the code according to conditions included in the user input.

According to an embodiment of the disclosure, the electronic device 100 may perform a service 1720 for translating code. For example, the electronic device 100 may generate a prompt according to a user input for requesting to translate code written in a "Python" programming language into code written in a "c" programming language. The electronic device 100 may input the generated prompt to the generative Al model to obtain a response including code written in another programming language.

FIG. 17B is a diagram for explaining a system that provides code by using a generative AI model, according to an embodiment of the disclosure.

Referring to FIG. 17B, according to an embodiment of the disclosure, the electronic device 100 may perform a service 1730 for generating text that describes the code. For example, the electronic device 100 may generate a prompt according to a user input requesting to generate text that describes code written in a programming language. The electronic device 100 may input the generated prompt to the generative Al model to obtain a response including the text that describes the code.

FIG. 17C is a diagram for explaining a system that provides code by using a generative AI model, according to an embodiment of the disclosure.

Referring to FIG. 17C, according to an embodiment of the disclosure, the electronic device 100 may perform a service 1740 for generating docstrings for the code. For example, the electronic device 100 may generate a prompt according to a user input requesting to generate docstrings for code written in a programming language. The electronic device 100 may input the generated prompt to the generative Al model to obtain a response including the text that describes code.

According to an embodiment of the disclosure, the electronic device 100 may perform a service 1750 for performing refactoring on the code. For example, the electronic device 100 may generate a prompt according to a user input requesting to perform refactoring on written code. The electronic device 100 may input the generated prompt to the generative Al model to obtain a response including newly-written code to perform the same function.

According to an embodiment of the disclosure, the electronic device 100 may perform a service 1760 for fixing bugs in the code. For example, the electronic device 100 may generate a prompt according to a user input requesting to fix bugs in the code. The electronic device 100 may input the generated prompt to the generative Al model to obtain a response including bug-fixed code.

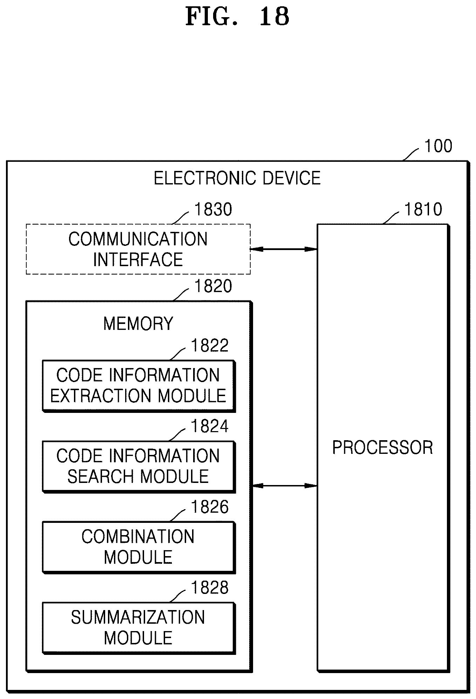

FIG. 18 is a block diagram of a structure of the electronic device 100 according to an embodiment of the disclosure.

According to an embodiment of the disclosure, the electronic device 100 may include a processor 1810, memory 1820, and a communication interface 1830.

The processor 1810 may control overall operations of the electronic device 100. For example, the processor 1810 may control overall operations of the electronic device 100 for providing personalized code, by executing one or more instructions of a program stored in the memory 1820. The processor 1810 may be included as one or more.

The processor 1810 may include, but is not limited to, at least one of a central processing unit, a microprocessor, a graphics processing unit, application specific integrated circuits (ASICs), digital signal processors (DSPs), digital signal processing devices (DSPDs), programmable logic devices (PLDs), field programmable gate arrays (FPGAs), an application processor, a neural processing unit, or an Al dedicated processor designed with a hardware structure specialized for processing an Al model.

The processor 1810 may obtain context information from a target document or a reference document by executing a code information extraction module 1822. For example, the processor 1810 may execute the code information extraction module 1822 to obtain context information including at least one of code or comment included in the target document or code or comment included in the reference document stored in the memory 1820. Because descriptions related to the operations of the code information extraction module 1822 have already been given with reference to the above-mentioned drawings, they are not repeated.

The processor 1810 may obtain the context information from a document written by another user or the reference document by executing a code information search module 1824. For example, the processor 1810 may execute the code information search module 1824 to obtain context information including at least one of code or comment included in the document written by the other user or code or comment included in an external reference document to be referenced by using a network. Because descriptions related to the operations of the code information search module 1824 have already been given with reference to the above-mentioned drawings, they are not repeated.

The processor 1810 may generate a first prompt, based on the context information, by executing the combination module 1826. Because descriptions related to the operations of the combination module 1826 have already been given with reference to the above-mentioned drawings, they are not repeated.

The processor 2240 may generate a second prompt, which is a result of summarizing the first prompt, by executing a summarization module 1828. Because descriptions related to the operations of the summarization module 1828 have already been given with reference to the above-mentioned drawings, they are not repeated.

The modules stored in the memory 1820 are for convenience of description, but embodiments of the disclosure are not limited thereto. To implement the above-described embodiments of the disclosure, other modules (e.g., a generative Al module) may be added, and some modules (e.g., a summarization module) may be omitted. One module may be divided into a plurality of modules distinguished according to detailed functions, and some of the above-described modules may be combined to form one module.

According to an embodiment, the electronic device 100 may further include additional components to perform the operations described in the above-described embodiments of the disclosure. For example, the electronic device 100 may further include a display, a camera, a microphone, a speaker, an I/O interface, etc. The display may output an image signal to the screen of the electronic device 100 under a control by the processor 1810.

According to an embodiment of the disclosure, a method may include a plurality of operations, and the plurality of operations may be performed by one processor or by a plurality of processors. In an example case in which a first operation, a second operation, and a third operation are performed by the method according to an embodiment of the disclosure, the first operation, the second operation, and the third operation may all be performed by a first processor, or the first operation and the second operation may be performed by a first processor (e.g., a general-purpose processor) and the third operation may be performed by a second processor (e.g., an Al processor). An Al dedicated processor, which is an example of the second processor, may perform operations for training/inference of an Al model. However, embodiments of the disclosure are not limited thereto.

One or more processors according to the disclosure may be implemented as a single-core processor or as a multi-core processor.

When the method according to an embodiment of the disclosure includes a plurality of operations, the plurality of operations may be performed by one core or by a plurality of cores included in one or more processors.

Instructions, a data structure, and program code readable by the processor 1810 may be stored in the memory 1820. Operations performed by the processor 1810 may be implemented by executing the instructions or codes of a program stored in the memory 1820.

The memory 1820 may include a flash memory type, a hard disk type, a multimedia card micro type, and a card type memory (for example, a secure digital (SD) or extreme digital (XD) memory), and may include a non-volatile memory including at least one of a read-only memory (ROM), an electrically erasable programmable ROM (EEPROM), a programmable ROM (PROM), magnetic memory, a magnetic disk, or an optical disk, and a volatile memory such as a random access memory (RAM) or a static random access memory (SRAM).

The memory 1820 may store one or more instructions and/or programs for causing the electronic device 100 to operate to provide code. For example, the memory 1820 may store instructions and/or programs for implementing the functions of the code information extraction module 1822, the code information search module 1824, the combination module 1826, and the summarization module 1828. The memory 1820 may further store instructions and/or programs for implementing the functions of a prompt generation module.

The communication interface 1830 may perform data communication with other electronic devices under a control by the processor 1810.

The communication interface 1830 may include a communication circuitry capable of performing data communication between the electronic device 100 and other electronic devices (e.g., the server 110), by using at least one of data communication methods including, for example, a wired LAN, a wireless LAN, Wi-Fi, Bluetooth, Zigbee, Wi-Fi Direct (WFD), infrared communication (IrDA), Bluetooth Low Energy (BLE), Near Field Communication (NFC), Wireless Broadband Internet (Wibro), World Interoperability for Microwave Access (WiMAX), a shared wireless access protocol (SWAP), Wireless Gigabit Alliances (WiGig), and RF communication.

The communication interface 1830 may transmit and receive a prompt regarding a generative AI model and code information corresponding to the prompt to and from the server 110. For example, the communication interface 1830 may transmit the prompt to the server 110 and may receive the code information from the server 110.

According to an embodiment of the disclosure, the electronic device 100 may not include the communication interface 1830. The electronic device 100 may provide the code information corresponding to the prompt by using a generative Al model included in the electronic device 100 instead of using a generative Al model of an external electronic device (e.g., the server 110).

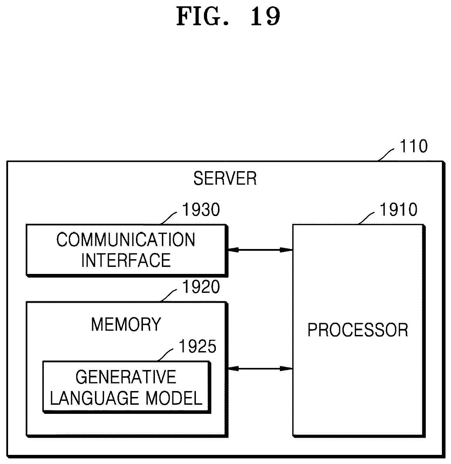

FIG. 19 is a block diagram of a structure of the server 110 according to an embodiment of the disclosure.

According to an embodiment of the disclosure, the server 110 may include a processor 1910, memory 1920, and a communication interface 1930. The server 110 may be a computing device that has a higher performance than the electronic device 100 and is capable of processing complex calculations and tasks using large-scale data, such as training, inference, management, and distribution of the generative AI model.

The processor 1910 may control overall operations of the server 110. For example, the processor 1910 may control overall operations of the server 110 for generating personalized code, by executing the one or more instructions of the program stored in the memory 1920. The processor 1910 may be included as one or more.

The processor 1910 may include, but is not limited to, at least one of a central processing unit, a microprocessor, a graphics processing unit, application specific integrated circuits (ASICs), digital signal processors (DSPs), digital signal processing devices (DSPDs), programmable logic devices (PLDs), field programmable gate arrays (FPGAs), an application processor, a neural processing unit, or an Al dedicated processor designed with a hardware structure specialized for processing an Al model.

The processor 1910 may generate code by executing a generative language model 1925. The processor 1910 may generate code corresponding to a prompt by using the generative language model 1925. According to an embodiment of the disclosure, the processor 1910 may summarize the prompt by executing the generative language model 1925. The processor 1910 may input the prompt obtained through the communication interface 1930 to the generative language model 1925 to generate a summarized prompt.

Instructions, a data structure, and program code readable by the processor 1910 may be stored in the memory 1920. Operations performed by the processor 1910 may be implemented by executing the instructions or codes of a program stored in the memory 1920.

The memory 1920 may include a flash memory type, a hard disk type, a multimedia card micro type, and a card type memory (for example, a secure digital (SD) or extreme digital (XD) memory), and may include a non-volatile memory including at least one of a read-only memory (ROM), an electrically erasable programmable ROM (EEPROM), a programmable ROM (PROM), magnetic memory, a magnetic disk, or an optical disk, and a volatile memory such as a random access memory (RAM) or a static random access memory (SRAM).

The memory 1920 may store one or more instructions and programs for causing the server 110 to operate to generate personalized code. For example, the memory 1920 may store instructions and/or programs for implementing the functions of the generative language model 1925. The generative language model 1925 may include a generative Al model.

The communication interface 1930 may perform data communication with other electronic devices under a control by the processor 1910.

The communication interface 1930 may include a communication circuitry capable of performing data communication between the server 110 and other electronic devices (e.g., the electronic device 100), by using at least one of data communication methods including, for example, a wired LAN, a wireless LAN, Wi-Fi, Bluetooth, Zigbee, Wi-Fi Direct (WFD), infrared communication (IrDA), Bluetooth Low Energy (BLE), Near Field Communication (NFC), Wireless Broadband Internet (Wibro), World Interoperability for Microwave Access (WiMAX), a shared wireless access protocol (SWAP), Wireless Gigabit Alliances (WiGig), and RF communication.

The communication interface 1930 may transmit and receive data for providing code to and from the electronic device 100. For example, the communication interface 1930 may receive the prompt from the electronic device 100 and may transmit the personalized code to the electronic device 100.

The disclosure relates to a method, electronic device, and server for generating and providing code by using a generative Al model. The disclosure also relates to a method of generating a prompt that is input to a generative Al model for providing code. Additional aspects will be set forth in part in the description which follows and, in part, will be apparent from the description, or may be learned by practice of the presented embodiments of the disclosure.

Information referenced for code generation may change dynamically according to circumstances. In an example case in which a library used for code generation changes, the information referenced for code generation may change. The generative AI model has difficulty in generating a result by using information created after a learning time point or information personally created by a user. Therefore, by providing a prompt containing context information to the generative Al model, a response tailored to the user's intention may be obtained. In this case, money and time on additional learning may be saved. However, the length of a prompt is limited according to a generative AI. Therefore, the length of the prompt may not exceed a threshold. The electronic device 100 according to an embodiment of the disclosure may generate a prompt that is shorter than the threshold and includes context information. Moreover, the electronic device 100 according to an embodiment of the disclosure may obtain an efficient and highly-reliable response from the generative Al model by determining the priority summarized in the prompt according to the importance of information. Additional technical effects will be set forth in part in the description which follows and, in part, will be apparent from the description, or may be learned by practice of the presented embodiments of the disclosure.

According to an embodiment of the disclosure, a method of providing code by using a generative artificial intelligence (AI) model is provided. The method may include obtaining a user input corresponding to a first document. The method may include obtaining first context information available for code generation based on the user input. The method may include generating a first prompt for the code generation based on the first context information and the user input. The method may include selecting, from the first context information, second context information according to priority information based on a length of the first prompt. The method may include generating a second prompt corresponding to the first prompt based on the second context information and the user input. The method may include transmitting the first prompt or the second prompt to a server. The method may include receiving, from the server, recommended code generated through the generative Al model based on the first prompt or the second prompt and providing the recommended code.

According to an embodiment of the disclosure, the first context information may include at least one of first code or first comment included in the first document. The first context information may include at least one of second code or second comment included in a reference document available in the code generation. The first context information may include at least one of third code or third comment included in a second document written by a second user within a group including a first user of the first document.

According to an embodiment of the disclosure, the reference document may include at least one of a document loaded into an integrated development environment (IDE), same as the target document, a document referenced by the first document among one or more documents included in a project including the first document, a package or library referenced by the first document, or an application programming interface (API) document referenced by the first document.

According to an embodiment of the disclosure, the user input may include a user input of correcting code in the first document. The obtaining of the first context information may include obtaining the first context information based on no additional user inputs being obtained during a defined period of time after the user input.

According to an embodiment of the disclosure, the user input may include a request regarding code generation included in the first document. The obtaining of the first context information may include obtaining the first context information based on the user input being obtained. The obtaining of the first context information may include the generating of the first prompt may include generating the first prompt comprising the request included in the user input.

According to an embodiment of the disclosure, the generating of the second prompt may include transmitting at least one of the first prompt, the first context information, or the user input to the server or another server. The generating of the second prompt may include obtaining a second prompt summarized through a generative Al model included in the server or the other server.

According to an embodiment of the disclosure, the selecting of the second context information may include determining the priority information regarding a priority of each of a plurality of pieces of information included in the first context information. The selecting of the second context information may include selecting context information, among the first context information, that is to be preferentially summarized, based on the priority information. The generating of the second prompt may include generating the second prompt by first summarizing high-priority context information until a length of the second prompt becomes less than a threshold value.

According to an embodiment of the disclosure, the generating of the second prompt may include generating the second prompt by deleting the high-priority context information, based on a length of a summarized second prompt being greater than the threshold value.

According to an embodiment of the disclosure, obtaining of the first context information may include determining target context information available for the code generation, based on at least one of the user input or the first document. Obtaining of the first context information may include obtaining the determined target context information from the first document or the reference document.

According to an embodiment of the disclosure, the priority information may include at least one of an order regarding context information that is preferentially processed when summarization is performed, or context information on which summarization is not performed.

According to an embodiment of the disclosure, an electronic device for providing code by using a generative artificial intelligence (AI) model is provided. The electronic device may include at least one processor including processing circuitry, and memory comprising one or more storage media storing at least one instruction. The at least one instruction, when executed by the at least one processor individually or collectively, cause the electronic device to obtain a user input corresponding to a first document. The at least one instruction, when executed by the at least one processor individually or collectively, cause the electronic device to obtain first context information available for code generation based on the user input. The at least one instruction, when executed by the at least one processor individually or collectively, cause the electronic device to generate a first prompt for the code generation based on the first context information and the user input. The at least one instruction, when executed by the at least one processor individually or collectively, cause the electronic device to select, from the first context information, second context information according to priority information based on a length of the first prompt. The at least one instruction, when executed by the at least one processor individually or collectively, cause the electronic device to generate a second prompt corresponding to the first prompt based on the second context information and the user input. The at least one instruction, when executed by the at least one processor individually or collectively, cause the electronic device to transmit the first prompt or the second prompt to a server. The at least one instruction, when executed by the at least one processor individually or collectively, cause the electronic device to receive, from the server, recommended code generated through the generative Al model based on the first prompt or the second prompt and provide the code.

According to an embodiment of the disclosure, the first context information may include at least one of first code or first comment included in the first document. The first context information may include at least one of second code or second comment included in a reference document available in the code generation. The first context information may include at least one of third code or third comment included in a second document written by a second user within a group including a first user of the first document.

According to an embodiment of the disclosure, the reference document may include at least one of a document loaded into an integrated development environment (IDE), same as the target document; a document referenced by the first document among one or more documents included in a project including the first document; a package or library referenced by the first document; or an application programming interface (API) document referenced by the first document.

According to an embodiment of the disclosure, the user input may include a user input of correcting code in the first document. The at least one instruction, when executed by the at least one processor individually or collectively, cause the electronic device to obtain the first context information based on no additional user inputs being obtained during a defined period of time after the user input.

According to an embodiment of the disclosure, the user input may include a request regarding code generation included in the first document. The at least one instruction, when executed by the at least one processor individually or collectively, cause the electronic device to obtain the first context information based on the user input and generate the first prompt including the request included in the user input.

According to an embodiment of the disclosure, the at least one instruction, when executed by the at least one processor individually or collectively, cause the electronic device to transmit at least one of the first prompt, the first context information, or the user input to the server or another server. The at least one instruction, when executed by the at least one processor individually or collectively, cause the electronic device to obtain a second prompt summarized through a generative Al model included in the server or the other server.

According to an embodiment of the disclosure, the at least one instruction, when executed by the at least one processor individually or collectively, cause the electronic device to determine the priority information regarding a priority of each of a plurality of pieces of information included in the first context information. The at least one instruction, when executed by the at least one processor individually or collectively, cause the electronic device to select context information, among the first context information, that is to be preferentially summarized, based on the priority information. The at least one instruction, when executed by the at least one processor individually or collectively, cause the electronic device to generate the second prompt by first summarizing high-priority context information until a length of the second prompt becomes less than a threshold value.

According to an embodiment of the disclosure, the at least one instruction, when executed by the at least one processor individually or collectively, cause the electronic device to generate the second prompt by deleting the high-priority context information based on a length of a summarized second prompt being greater than the threshold value.

According to an embodiment of the disclosure, the at least one instruction, when executed by the at least one processor individually or collectively, cause the electronic device to determine target context information available for the code generation, based on at least one of the user input or the first document. The at least one instruction, when executed by the at least one processor individually or collectively, cause the electronic device to obtain the target context information from the target document or the reference document.

According to an embodiment of the disclosure, the priority information may include at least one of an order regarding context information that is preferentially processed when summarization is performed, or context information on which summarization is not performed.

According to an embodiment of the disclosure, a computer-readable recording medium having recorded thereon a computer program, which, when executed by a computer, performs the above method.

According to an embodiment, the machine-readable storage medium may be provided as a non-transitory storage medium. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory recording medium may include a buffer in which data is temporarily stored.

According to an embodiment of the disclosure, a method according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as memory of a manufacturer's server, a server of an application store, or a relay server, or may be temporarily generated.

## Claims

1. A method of providing code by using a generative artificial intelligence (AI) model, the method comprising:
obtaining a user input corresponding to a first document (S210);
based on the user input, obtaining first context information available for code generation (S220);
based on the first context information and the user input, generating a first prompt for the code generation (S230);
based on a length of the first prompt, selecting, from the first context information, second context information according to priority information(S240);
based on the second context information and the user input, generating a second prompt corresponding to the first prompt (S250);
transmitting the first prompt or the second prompt to a server (S260); and
receiving (S270), from the server, recommended code generated through the generative AI model based on the first prompt or the second prompt and providing the recommended code.

2. The method of claim 1, wherein the first context information comprises:
at least one of first code or first comment included in the first document;
at least one of second code or second comment included in a reference document available in the code generation; and
at least one of third code or third comment included in a second document written by a second user within a group including a first user of the first document.

3. The method of claim 2, wherein the reference document comprises at least one of:
a document loaded into an integrated development environment (IDE), same as the target document;
a document referenced by the first document among one or more documents included in a project including the first document;
a package or library referenced by the first document; or
an application programming interface (API) document referenced by the first document.

4. The method of any one of claims 1 through 3, wherein
the user input comprises a user input of correcting code in the first document, and
the obtaining of the first context information (S220) comprises obtaining the first context information based on no additional user inputs being obtained during a defined period of time after the user input.

5. The method of any one of claims 1 through 4, wherein
the user input comprises a request regarding code generation included in the first document,
the obtaining of the first context information (S220) comprises obtaining the first context information based on the user input being obtained, and
the generating of the first prompt (S230) comprises generating the first prompt comprising the request included in the user input.

6. The method of any one of claims 1 through 5, wherein the generating of the second prompt (S250) comprises:
transmitting at least one of the first prompt, the first context information, or the user input to the server or another server; and
obtaining a second prompt summarized through a generative Al model included in the server or the other server.

7. The method of any one of claims 1 through 6, wherein
the selecting of the second context information (S240) comprises:
determining the priority information regarding a priority of each of a plurality of pieces of information included in the first context information; and
selecting context information, among the first context information, that is to be preferentially summarized, based on the priority information, and
the generating of the second prompt (S250) comprises generating the second prompt by first summarizing high-priority context information until a length of the second prompt becomes less than a threshold value.

8. The method of claim 7, wherein the generating of the second prompt (S250) comprises generating the second prompt by deleting the high-priority context information, based on a length of a summarized second prompt being greater than the threshold value.

9. The method of any one of claims 1 through 8, wherein the obtaining of the first context information (S220) comprises:
determining target context information available for the code generation, based on at least one of the user input or the first document; and
obtaining the determined target context information from the first document or reference document.

10. The method of any one of claims 1 through 9, wherein the priority information comprises at least one of an order regarding context information that is preferentially processed when summarization is performed, or context information on which summarization is not performed.

11. An electronic device for providing code by using a generative artificial intelligence (AI) model, the electronic device comprising:
at least one processor (1810) including processing circuitry; and
memory (1820) comprising one or more storage media storing at least one instruction that, when executed by the at least one processor individually or collectively, cause the electronic device to:
obtain a user input corresponding to a first document;
based on the user input, obtain first context information available for code generation;
based on the first context information and the user input, generate a first prompt for the code generation;
based on a length of the first prompt, select, from the first context information, second context information according to priority information;
based on the second context information and the user input, generate a second prompt corresponding to the first prompt;
transmit the first prompt or the second prompt to a server; and
receive, from the server, recommended code generated through the generative Al model based on the first prompt or the second prompt and provide the code.

12. The electronic device of claim 11, wherein the first context information comprises:
at least one of first code or first comment included in the first document;
at least one of second code or second comment included in a reference document available in the code generation; and
at least one of third code or third comment included in a second document written by a second user within a group including a first user of the first document.

13. The electronic device of claim 12, wherein the reference document comprises at least one of:
a document loaded into an integrated development environment (IDE), same as the target document;
a document referenced by the first document among one or more documents included in a project including the first document;
a package or library referenced by the first document; or
an application programming interface (API) document referenced by the first document.

14. The electronic device of any one of claims 11 through 13, wherein
the user input comprises a user input of correcting code in the first document, and
the at least one instruction, when executed by the at least one processor individually or collectively, cause the electronic device to:
obtain the first context information based on no additional user inputs being obtained during a defined period of time after the user input.

15. A computer-readable recording medium having recorded thereon a computer program, which, when executed by a computer, performs the method
of one of claims 1 through 10.
